# EUROPEAN PATENT SPECIFICATION

(11) **EP 1 542 561 B1**
(45) Date of publication and mention of the grant of the patent: **28.02.2007**
(21) Application number: 03749083.6
(22) Date of filing: 20.08.2003
(51) Int. Cl.: A44B 18/00, B41J 3/407, G09F 7/12

(54) **PRINTABLE FASTENER COMPOSITES**
DRUCKBARE VERSCHLUSSVORRICHTUNG
COMPOSITES D'ELEMENTS DE FIXATION IMPRIMABLES

(30) Priority: 20.08.2002 US 404722 P; 20.03.2003 US 456337 P
(43) Date of publication of application: 22.06.2005
(73) Proprietor: VELCRO INDUSTRIES B.V., Curacao (AN)
(72) Inventor: SHEPARD, William, H., Amherst, NH 03031 (US); PROVOST, George, A., Litchfield, NH 03052 (US); SLOWIKOWSKI, Derrick, Merrimack, NH 03054 (US); KINGSFORD, Howard, A., Amherst, NH 03031 (US); OBERG, Cynthia, J., Manchester, NH 03104 (US); LEVESQUE, Joseph, R., Londonderry, NH 03053 (US)
(74) Representative: Müller-Boré & Partner Patentanwälte
(86) International application number: PCT/US2003/026069
(87) International publication number: WO 2004/017781

(56) References cited:
- WO-A-00/73063
- US-A- 5 260 015
- US-A- 5 447 590
- US-B1- 6 410 099
- PATENT ABSTRACTS OF JAPAN vol. 017, no. 059 (M-1363), 5 February 1993 (1993-02-05) & JP 04 269288 A (SANKOO KOUGIYOU KK), 25 September 1992 (1992-09-25)

## Description

### BACKGROUND

The invention relates generally to composite touch fastener products with arrays of male fastener elements configured to releasably engage loops or other fastener elements, and more particularly to the use of such fastener products to bear printing, photographs and other indicia, see for example document WO 00/73063 A.

In relation to printing, the following terms are used herein: "Paper" refers to fibrous paper and non-fibrous paper substitutes fabricated to serve graphic purposes, e.g. the "synthetic" paper, Teslin^{™} from PPG Industries of Monroeville, PA, USA, that has a side fabricated for receiving printing or writing. "Printing Paper" refers to paper designed to receive print. In the case of fibrous paper, the paper is typically calendered to produce a desired flattening of the fibers. "High Quality" fibrous printing paper is coated to provide an improved surface finish. "Print Quality" relates to the printed reproduction of an original image on paper; "excellent print quality" refers to an almost exact duplicate. "Printable" means capable of receiving and presenting printing substance in form representing graphic information, e.g. a printed pattern of dots representing alpha-numeric symbols, drawings, designs, or similar visual forms including photographic images produced by printing. The printing substance may comprise fluid ink, fine particles such as toner or a transfer substance capable of being adhered to the printable side of a product. "Photo Quality Printable" means capable of receiving and presenting process color printing (fine, adjacent dots of different colors such as CYMK, dots not substantially overlapped). The term is broadly intended to cover products such as artwork and drawings as well as photographs, and to cover products printed by X-Y traverse of a printer, as well as products printed by printers in which the products traverse a serpentine or other curved path for sheet material in cut sheet or continuous length form. "Writeable" means capable of receiving free-form hand writing or hand printing such as from a ball point, flowing ink pen, or constrained-form writing, as from the stylus of a strip-chart recorder for graphic information including graph plots. "Photographically Developable" or "Photo-developable" means capable of being exposed and developed or photo-printed, e.g. by chemicals, to provide photographs.

"Brightness" is a measure of relative intensity of light diffusely reflected from a paper surface. The brightness of the paper influences the contrast obtained between the printed image and the unprinted paper surface. "Dot Gain" is the increase in dot size on paper from that which was applied to the paper, expressed in percentage. In reference to inkjet printing, dot gain refers to the increased final dot size that is set on paper relative to the size of a drop of ink projected onto the paper. "Dot Size" is determined by the volume of a droplet of printing material. In the case of inkjet ink, a droplet size can be as small as 2 picoliters, and result on paper in a dot of diameter of approximately 13 microns. "Gloss finish" refers to specular reflection from paper. A paper sheet has a high gloss when it reflects a large portion of light undistorted, reflection in which the angle of light incidence equals the angle of reflection, of opposite sign. "Matte finish" refers to a finish that causes diffused reflection of light, light scattered in random directions. A paper that diffuses a large percentage of light is referred to as "matte" or "dull" paper. Diffuse reflection usually occurs due to particles that form the paper surface being oriented in many planes. "Image Sharpness" refers to the degree of trueness of lines and clarity of edges of images of objects reproduced on paper. "Light absorption" refers to the amount of light not reflected from a paper surface or transmitted through the paper. "Opacity" refers to the ability of a paper to prevent transmission of light. High opacity is desirable to prevent 'show through' of a printed image. "Reflectance" is the ratio of the amount of light reflected from a surface compared to the amount of incident light. "Surface Color" refers to perceived color by an observer and refers to the portion of the incident light that is not absorbed, transmitted or subjected to specular reflection by the paper. "Surface Finish" relates to height difference producing surface roughness, i.e. the range of distance in the Z axis (normal to the paper surface) between the high and low individual irregularities of the surface.

"Resin Coated Paper" refers to paper carrying a polymeric coating that has been extruded or otherwise coated upon the paper surface. Resin coatings are ordinarily employed to produce glossy surfaces. "Cast Coated Paper" refers to a paper coating process designed to create a smooth glossy surface by pressing a wet coated paper face-wise against a smooth rotating dryer drum, such that the surface quality of the drum is imparted to the set surface of the coating. "Machine Feed" refers to the progress of paper through a printer. "Caliper" refers to the thickness of paper expressed in mils (thousandths of an inch). "Basis Weight" refers to the weight of a ream of 500 sheets of paper of a given size. The size of the sheet depends upon the end use category. For example, in the United States, basis weight given for business papers is based upon 17"x22" sheet size while basis weight given for book papers is based upon 25"x28" sheet size. "Stiffness" relates to the bend resistance of paper as it courses through a curved printer feed path. "Flatness" refers to the degree with which a paper exhibits a smooth level surface, with little or no depression or elevation. "Runnable" means capable of moving through a device which acts upon the substrate, while maintaining registration of the substrate with the device sufficiently to enable it to receive graphic information or other precise actions.

"Continuous Length" means a continuous length as of a web-form product capable of receiving printing while running through a printing press or continuous printer. A "Cut Sheet" is a sheet of web-form product cut to pre-specified dimensions, typically furnished in multiples in a stack, such as a sheet capable of being fed from a stack through a computer printer. A "Notesheet" is a writeable cut sheet, such as furnished in multiples in a stack or in a notebook.

"Fastener Hook" or "Hook Fastener" means any hook for hook-to-loop or hook-to-hook fastening, including e.g., molded hooks such as J-hooks, palm tree hooks, or mushroom hooks, preforms for post-formed hooks, heads formed on appropriately positioned monofilament stems, and hooks formed by cut-and stretch techniques. This includes hooks facing one, two, or many directions. A "Mini-Hook" is a hook of height of about 0.015 inch (0.48 mm) or less. A "Micro-Hook" is a hook of height of about 0.010 inch (0.25 mm) or less. A "Sub-micro-Hook" is a hook of height of about 0.008 inch (0.2 mm) or less. A "Molded Fastener Hook" is a hook molded of hook-formable composition, typically thermoplastic resin, having sufficient stiffness to serve as a fastener hook. A "Post-formed Fastener Hook" is a fastener hook formed by post forming a preform element, as by heating with attendant melt flow to form a hook head or by reworking the distal end of a preform element as by heating followed by, or simultaneously with, pressing or molding.

"Printing Apparatus" means any printing apparatus capable of printing on the paper side of a paper-hook composite, including non-contact printing, contact printing and transfer printing. Examples include the following: ink jet, electrostatic, flexographic (with appropriately resilient print surface), pad transfer, screen print, and letter press (with appropriate provision in the various contact printing techniques for protecting the hooks such as a resilient print surface or a suitable cushion characteristic provided in the composite). A "Digital Printing Apparatus" is a printing apparatus constructed to apply print to printable products in direct response to digital-computer-originated control signals of digital or analog form. A "Computer Printer" is a digital printing apparatus in which printable cut sheet passes through a print path that includes an arcuate path segment of a bend radius typically less than about 1.5 inch. "Non-contact Printing" refers to printing techniques that require no physical contact of a print device with the printable surface. "Ink-Jet Printing" means either ink jet or bubble jet printing.

### SUMMARY

According to one aspect of the invention, a paper-hook composite sheet product is provided having a paper side and a hook fastener side, the hook fastener side having a field of fastener hooks, the paper side having a surface formed to be printable, writeable or photo-developable in the presence of the fastener hooks on the obverse side.

According to this aspect of the invention and other aspects to be described, hooks are defined to be any hook for hook-to-loop or hook-to-hook fastening, including e.g., molded hooks such as J or palm tree hooks, mushroom hooks, heads formed on appropriately positioned monofilament or molded stems, and hooks formed by cut-and stretch techniques. Engageable portions of hooks may face in one, two, or many directions.

Implementations of this aspect have one or more of the following features. The paper side has a brightness of at least 40 percent. The paper side is printable and has characteristics selected to receive and faithfully present ink dot density of at least 200 dots per inch (508 dots per cm), or at least 600 dots per inch (1524 dots per cm), or at least 1600 dots per inch (4064 dots per cm), or at least 2400 dots per inch (6096 dots per cm). The paper side is printable by a process employing four colors. The paper side is printable and has a dot gain characteristic of no more than 50 percent. In preferred cases, the paper is calendered and for high quality printing, the print-receiving side of the paper is coated.

According to another aspect of the invention, a paper-hook composite sheet product is provided having a printable paper side and a hook fastener side, the printable side having characteristics formed to be photo quality printable, e.g. capable of receiving 4 color printing.

Implementations of this aspect have one or more of the following features. The paper is calendered and its print-receiving side is coated. The paper side has a brightness of at least 80%. The paper side has characteristics selected to receive and faithfully present ink dot density of at least 600 dots per inch per color (1524 dots per cm per color). The paper side has a dot gain characteristic of no more than 20 percent. The paper side has an opacity of at least 80 percent. The paper side has a glossy finish of at least 60 percent specular reflectance, in preferred cases, the glossy finish having no more than 6 micro inch surface roughness (15.24 x 10⁻⁶ cm surface roughness).

As another aspect of the invention, various products of the two previous aspects are in many cases, "runnable" products, i.e. capable of moving through a device that acts upon the product while maintaining registration of the product with the device sufficiently to enable it to receive graphic information or other precise actions.

Preferred implementations of this aspect have one or more of the following features. The hooks of the hook side have a height less than 0.025 inch (1.27 mm), preferably below 0.020 inch (0.508 mm), and for excellent print quality a height between about 0.005 inch (0.127 mm) and 0.010 inch (0.254 mm). The paper side is a discrete layer and the hooks have an integral backing layer having a maximum thickness of 0.005 inch (0.127 mm), preferably in many instances less than .003 inches (0.076 mm). The hooks of the hook side have a hook density between about 100 to 7500 hooks per square inch (15.5 to 1162.5 per square cm). The hook side is formed from thermoplastic resin having a flexural modulus between about 15,000 and 60,000 pounds per square inch (psi) (1.03421e+08 to 4.13685e+08 pascals), in certain preferred cases about 30,000 psi (2.06843e+08 pascals). The hook side comprises film grade, low density polyethylene. The printable paper side is defined by a discrete preformed paper layer having a thickness between about 0.003 inch (0.0762 mm) and 0.015 inch (0.381 mm). The printable paper side is defined by a discrete preformed paper layer, having a basis weight of between about 18 pounds (8.16466 kilograms) to 90 pounds (40.8233 kilograms), referencing a ream of 500 sheets of 22 inches (55.88 cm) by 17 inches (43.18 cm).

Furthermore, the printable paper side, prior to joining with the hook side, has a stiffness, measured by the Gurley stiffness test, between 200 mg and 3000 mg. The composite product has a stiffness, measured by the Gurley stiffness test in the machine direction of formation of the hooks, between about 100 mg and 1500 mg. The product has a stiffness, measured by the Gurley stiffness test in the paper machine direction, between about 100 mg and 2500 mg. The total thickness of the paper-hook composite is no more than about 0.035 inch (0.889 mm), preferably in many instances no more than about 0.030 inch (0.762 mm) or 0.025 inch (0.635 mm). The composite product has the characteristic that, when lying on a flat surface with its paper side up, any portion of the product does not curl (hump up) to a height more than about 1.5 inch (3.81 cm) from the flat surface. The composite product is capable of bending about a bend radius of less than about 1.5 inch (3.81 cm) to feed through a desk-top inkjet printer, preferably having a bending characteristic permitting elastic bending about a bend radius of less than about 0.8 inch (2.032 cm) to feed through an inkjet printer.

The back of the material comprising the paper side of the composites is preferably intimately joined to the field of hooks prior to printing, the joining being either directly to the hooks themselves or via one or more intervening layers. In implementations of this aspect, the product comprises a paper-hook laminate or an *in situ* laminate.

The products of the various aspects have characteristics selected to enable printing by a digital printing apparatus or characteristics selected to enable printing by a computer printer, in particular cases, comprising *in situ* paper-hook laminates, or having characteristics selected to enable non-contact printing, or characteristics selected to enable ink jet printing, or characteristics selected to enable non-contact printing of the ink jet type.

In various implementations, with the paper side printable, the paper side has a cast coating of characteristics selected to receive ink-jet printing, in preferred cases the cast coating having air permeability of no greater than 300 sec/100 cc, i.e. no greater than 300 seconds in which 100 ml of air under a load of a freely moving inner cylinder (567 +/- 1.0 g) passes through 645 mm² of a sample paper.

The product may comprise a continuous length product or a cut-sheet product, in particular, a cut-sheet printable product, e.g. a sheet cut to a length of 11 inches (27.94 cm) and a width of 8.5 inches (21.59 cm), or to other standard paper size.

Another aspect of the invention is a process of providing any number of the products described above and printing the product with selected print apparatus. In preferred implementations, the printing apparatus is a digital print apparatus, or a printing apparatus that prints by non-contact printing, or a computer printer, or an ink jet printer. In certain implementations, advantageously, the paper-hook composite is a continuous length printable product, and the printing proceeds to print the continuous length; in other cases the paper-hook composite is a cut sheet printable product, and is printed accordingly.

Another aspect of the invention is a product that comprises a plurality of bands of hooks on the hook fastener side for use with a printer having rolls defining predetermined paths relative to the paper, and in which the bands of hooks are offset from the predetermined paths, there being at least two bands of hooks. In these and other cases, the bands of hooks are located along opposite longitudinal margins of the composite.

Another aspect of the invention is a paper-hook composite bearing hooks only at selected locations on one or both sides of paper.

Implementations of this aspect have one or more of the following features.

The paper remains free of hook-forming resin in selected regions on both sides of the paper. The hooks are located in one or more continuous bands in the machine direction of forming the hooks. The band or bands are located along longitudinal margins of the completed product. One or more bands of hooks are formed at selected locations including at least one location spaced inwardly from the edges of a relatively wide sheet, and following formation, the paper-hook composite is slit at the band to provide bands on the cut edges of the two parts of the slit edge. The paper is subjected to an operation following forming the hooks on regions of the paper other than the locations where the hooks are located. The operation is printing, and the hooks are located in machine direction zone in which printing does not occur; in one case printing occurs with cylinders bearing upon both sides of the paper, the cylinders being relieved in regions corresponding with the zones such that the hooks do not receive printing pressure. The pressure of printing exceeds the pressure at which the hooks are damaged. The hooks are of flexural modulus less than 35,000 psi (2.41316e+08 pascals), or 30,000 psi (2.06843e+08 pascals) or 25,000 psi (1.72369e+08 pascals). The printing is performed employing rigid or non-compliant roll surfaces. The hooks are located in dots or patches corresponding with a desired end use.

In some cases, the product includes a field of hooks continuously covering the hook fastener side.

Another aspect of the invention is printable paper-hook composite in which the individual hooks are intentionally weak and individually readily releasable from loops with which they are engaged, in particular loops not designed to serve as loop fastener components, such as decorative woven wall coverings. Typically such hooks are presented in high density over large fields, so that by aggregate effect the objects are securely held. Implementations have one or more of the following features. J hooks are selected, in which all face in the same direction. Hooks are made of low flexural modulus resin, e.g. of modulus less than 35,000 psi (2.41316e+08 pascals), or 30,000 psi (2.06843e+08 pascals). Indeed it is seen that depending upon the design and method of fabrication, modulus values as low as 25,000 psi (1.72369e+08 pascals) or 15,000 psi (1.03421e+08 pascals) are operable. Likewise, for particular conditions and depending also upon the size and engagement shape of the hooks selected, the density of hooks may likewise be maintained below the maximum values described herein, to minimize disruption of any surface to which the product is applied.

Another aspect of the invention features a method of producing a fastener laminate material. The method includes introducing molten resin to a gap defined adjacent a surface of a molding roll defining an array of cavities, such that pressure in the gap forces the resin into the cavities to mold an array of stems extending integrally from a sheet of resin, and permanently laminating the sheet of resin to a preformed sheet of material. The method is characterized in that, as bonded to the resin in the laminate material, a broad side of the preformed sheet is exposed, and in that the exposed side of the preformed sheet has a surface suitable for printing or writing thereupon, or for developing photographic images thereupon.

Another aspect of the invention is a manufacturing process for forming a product comprising providing materials for, and processing the materials to provide, a paper-hook composite product having a printable, writeable, or photo developable paper side and a hook fastener side.

Implementations of these aspects have one or more of the following features. A preformed paper is provided having a printable, writeable, or developable side and an obverse side and applying a layer of fastener hooks either directly or indirectly to the obverse side. In certain cases also, the hooks are formed while laminating the hook *in-situ* to the paper, or the layer of fastener hooks is preformed and is laminated to the back of a preformed paper layer.

In some cases, a preformed paper layer and a preformed hook layer are provided and the layers are joined by addition of adherent material to the back of the paper layer, the hook layer, or both. Another aspect of the invention provides the added adherent material in the form of a foam.

Another aspect of the invention is a process in which during lamination a portion of a foam thickness is melted to provide an adherent material and a portion of the foam thickness is preserved to provide a cushioning effect to the final product. Another aspect includes joining a paper layer to hooks and thereafter treating the paper layer to render it printable, writeable or developable, in some cases the treating comprising applying a photo-sensitive composition.

Another aspect of the invention is a process for producing photo developable paper for photos and the like comprising providing a paper substrate useful in such product, applying a field of hooks to the back of the paper or coated paper, preferably by in situ lamination, and thereafter, in the dark, processing the substrate by applying coatings that render the paper photo developable.

Another aspect of the invention is a note sheet comprises a paper-hook composite. Implementations of this aspect have one or more of the following features. The composite is a paper-hook laminate, preferably an in situ laminate. The hooks have height of about 0.025 inch (0.635 mm) or less. As with the previous aspects, in many cases the hooks are mini-hooks or smaller, i.e., having height of about 0.015 inch (0.48 mm) or less. The hooks are micro-hooks or smaller, i.e., having height of about 0.010 inch (0.25 mm) or less. The hooks are sub-micro hooks or smaller, i.e., having height of about 0.008 inch (0.2 mm) or less. The hook fastener side comprises at least one field of hooks in which hooks have a density of at least 100 hooks per square inch (15.5 hooks per square cm) along an extended area.

Another aspect of the invention features a method of preparing a printed object comprising either preparing an image by computer by accessing the image via the computer or preparing it on the computer e.g. by typing or art work, or by scanning an image, then directing the digital image to an ink jet printer, and printing the image on printable paper backed by fastener hooks.

The details of one or more implementations of various aspects of the inventions are set forth in the accompanying drawings and the description below. Other features, objects, and advantages of the inventions will be apparent from the description and drawings, and from the claims.

### DESCRIPTION OF DRAWINGS

FIG 1 is a perspective view of a wrapped stack of sheets of paper-hook composite. The back of each sheet carries a field of fastener hooks.
FIG 1A is a magnified edge view of an individual paper-hook composite sheet of the stack of FIG 1 while FIG 1B is a plan view of the hook side and FIG 1C is a plan view of the paper side of the sheet of FIG 1A.
FIG 2 is a perspective view of a hook-backed paper sheet being fed through an inkjet printer while FIG 2A is a diagrammatic side view of printer's paper feed path for the printer.
FIG 3 is a perspective view of a hook-backed paper sheet being fed through another inkjet printer while FIG 3A is a side view of the printer's paper feed path.
FIG 4 is a perspective view of an office cubicle having fabric-covered walls, on one of which hook-backed papers, following printing, have been attached. A further wall is shown covered with hook-backed wall paper.
FIG 5 is a partially cross-sectional, diagrammatic view on magnified scale illustrating an attachment of FIG 4.
FIG 6 is a perspective view of a stack of writeable paper sheets, each having fastener hooks on its back.
FIG 7 shows a desktop of a home computer system associated with an inkjet printer while FIG 7A is a diagrammatic perspective view of a printable material comprising a paper and molded hook laminate.
FIG. 8 is a diagrammatic view of a child in a car seat of an automobile looking at decals attached with hook fasteners to the auto headliner.
FIG 9 is a magnified side view of hook-backed paper.
FIG 10 illustrates an apparatus for manufacturing an integrally molded hook engaging member with paper according to an *in situ* laminating technique, while FIG. 11 is a variation of the machine and method based on the same general principles.
FIG 12 is an enlarged view of the molding nip of FIG 10.
FIG 13 is a diagrammatic side view of an inkjet printer's paper feed path while FIG. 14 is a longitudinal cross-sectional view taken along line 14 of FIG. 13.
FIG 15 is a plan view of the drive roller patterns of a number of inkjet printers superimposed upon a standard printable sheet.
FIG. 16 is a diagrammatic plan view of a printable paper-hook composite sheet carrying two bands of fastener hooks on its back.
FIG 16A is an enlarged edge view of the paper of FIG 16, at an inner edge of one of the fastener element bands. FIG 16B shows an alternative construction.
FIG. 17 is a cross-section view of a pressure nip engaging the sides of a paper-hook composite in regions not occupied by hooks
FIG. 18 shows a paper-hook composite being treated on a roll.
FIG. 19 is a side view of a portion of a paper-hook-loop composite band.
FIG 20 is a side view of a wristlet formed of the band of FIG. 19 and bearing outwardly directed loops to which a paper loop composite cameo photograph is attached.
FIG. 21 shows a paper-loop composite which carries loop material for securing to a wall.
FIG. 22 shows a wall paper-hook composite wall hanging having single direction hooks pointing downwardly.
FIG. 23 is a schematic illustration of a trade show booth and floor display system.
FIG. 24 schematically illustrates a scrap-book.
FIG. 25 illustrates a floor runner and window display of printed paper-hook composite applied to hook-engageable material and displayed in a store.
FIG. 26 is a diagrammatic side view of a pendant display of merchandise.
FIGS. 27-30 illustrate laminating of paper-hook composite by spray coating, curtain coating, roll coating and extrusion of an adhesive laminating layer, respectively.

Like reference symbols in the various drawings indicate like elements.

### DETAILED DESCRIPTION

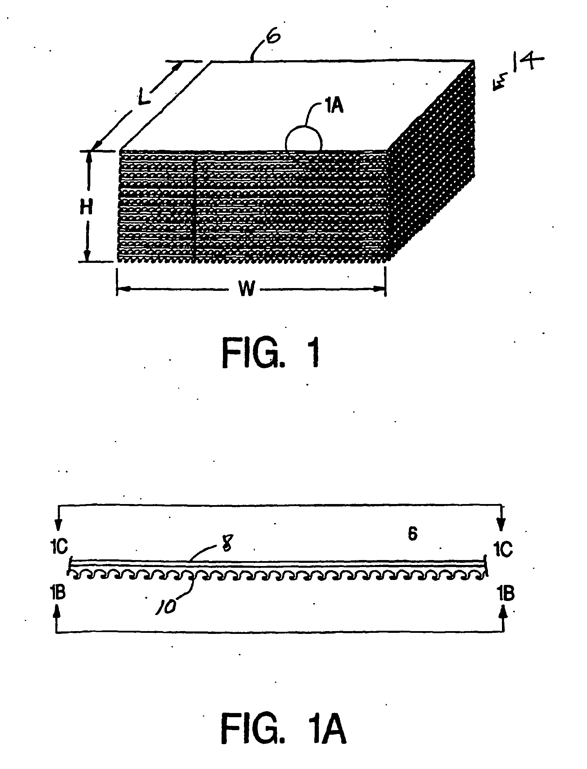

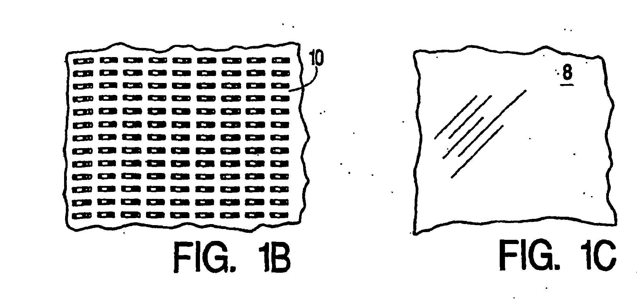

Referring to FIGS. 1 to 1C, various aspects of the invention concern print stock, for instance stack 14 of sheets, formed as *in situ* laminates of paper and hook material. The absorbent and adherent properties of the unbonded side of the printing paper in such a laminate is found to have great utility for printing despite the presence of hooks on the back during printing. By choice of a suitable grade of paper, fine quality accurate printing can be accomplished after forming of the composite. It is discovered that the paper-hook laminate can be printed even with photo quality, for instance, on the inkjet printer of a home computer, or indeed the paper may be photo-developable (photo printable). It is remarkably found for instance, that with an array of hooks of height of about 0.015 inch or less, the paper-backed laminate, e.g. using wall paper grade paper, can readily pass through a home computer printer, for instance the Canon^{™} Bubble Jet Printer. Desirable quality of images and graphics on the hook material can be realized on an as-needed basis, with as-desired or computer downloaded designs. The laminate thus enables internet downloadable designs made accessible to customers by a sponsor for instance of a dog placemat or an infant floor mat sponsored by dog food or baby food suppliers, as a form of advertising. Internet download of designs may be cut from the material and applied for personalizing effects.

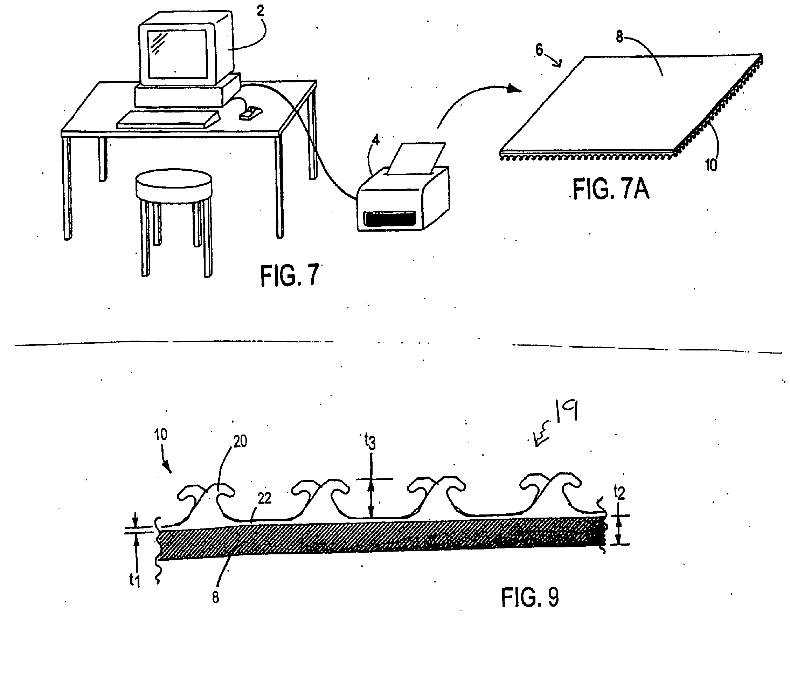

Referring next to FIG. 7, a home computer 2 is pictured communicating with the internet and outputting to a home ink jet printer 4 suitable for working with a home computer 2 such as a PC or a Laptop. Laminate 6 of the paper 8 and hook material 10 is computer printable, for instance highly decorated and colorful doll clothes are printed by computer printer 4 of home computer 2. Likewise small-size sewing patterns may be printed (or larger patterns on inkjet drafting printers) and engaged on cloth without need for pins. This is useful both to seamstresses and the apparel trade. A pet company may communicate a design to a home owner or pet owner. For instance the company may formulate a name plate and a depiction of the pet which in fact could be a photograph of a pet. This depiction, downloaded over the internet by the computer, may be printed by the home ink jet printer, onto the paper surface 122 of the hook material. These decals can be cut out and placed on the place mat to personalize the place mat or the animal. It is found that pet bowls also with hook stay securely on a place mat formed of loop material which has also been printed upon and are not upset, despite activity of the pet.

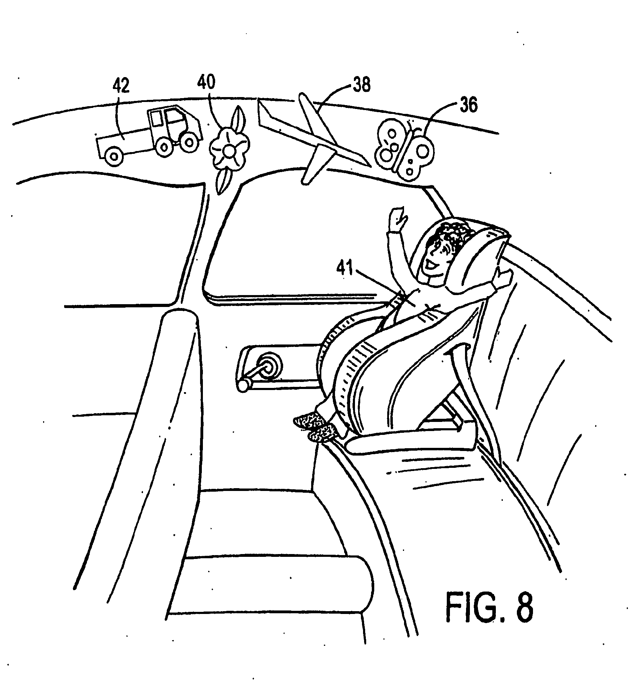

Referring to FIG. 8 a young child is pictured in a car seat in the back of an automobile looking at decals 36, 38, 40, and 42 comprising paper laminated to the hook material in the in situ manner to be described. Such decals 36, 38, 40, and 42 may be drawn on a homeowner's computer or obtained from friends or other sources via the internet, printed on the materials as shown in FIG. 7A, cut out and made available to an infant or young child for their attention and entertainment during driving. Headliners of many automobiles are made of a loop material which is readily engageable by hooks of the paper-hook laminate as described.

Another use for the hook-backed quality color process printable paper is with respect to wrist bracelets, broaches and other personal adornment or attire, or luggage and back packs, that carry a field of loops, to which a user (infants, grade school children, teenagers, grandparents) can attach cameo photos or the like. For instance, inkjet photo-reproduced photographs, such as of friends' faces, may be attached to an inexpensive paper-loop wristlet. Likewise, pieces of attire, e.g. a ball cap, with a field of permanent loops, may receive hook-backed, inkjet printed insignia of one's own design, e.g. military rank, ball team logo, for young boys.

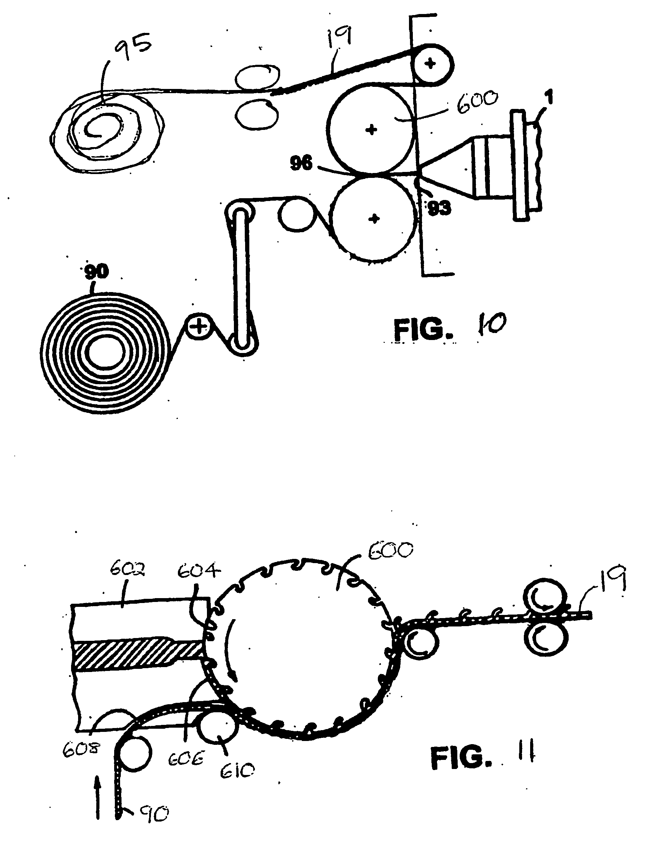

Referring to FIG. 9, sheet 19 has a hook side 10 comprised of a large multiplicity of individual hooks 20 and integral backing layer 22, monolithically formed of synthetic resin. Adjacent rows of hooks 20 face in opposite directions. The hooks 20 have height t₃ and backing layer 22 of thickness t₂. Laminate sheet 19 also includes printing paper 8 having thickness t₁. In one implementation, illustrated by FIG. 9, the hooks or "mini-hooks" are commercially available as Hook #29 from Velcro USA Inc. In this example, t₃ is 0.0152 inch, the density of the mini-hooks is 567 hooks per square inch, the backing layer thickness t₂ is 0.002 inch, and the paper is commercially available as Premium Gloss 68# from Red River Paper^{™} of Dallas, Texas and has a thickness t₁ of 0.010 inch.

In an advantageous installation for protecting loops from damage, J-form hooks are employed facing in a single direction, such as shown in FIG. 1A, for instance. These hooks are arranged with respect to the printed matter so that when placed upon a vertical or inclined surface (with the graphic information properly oriented) the tips of the crooks of the hooks angle downward and thus engage the loops and thus support the paper-hook composite.

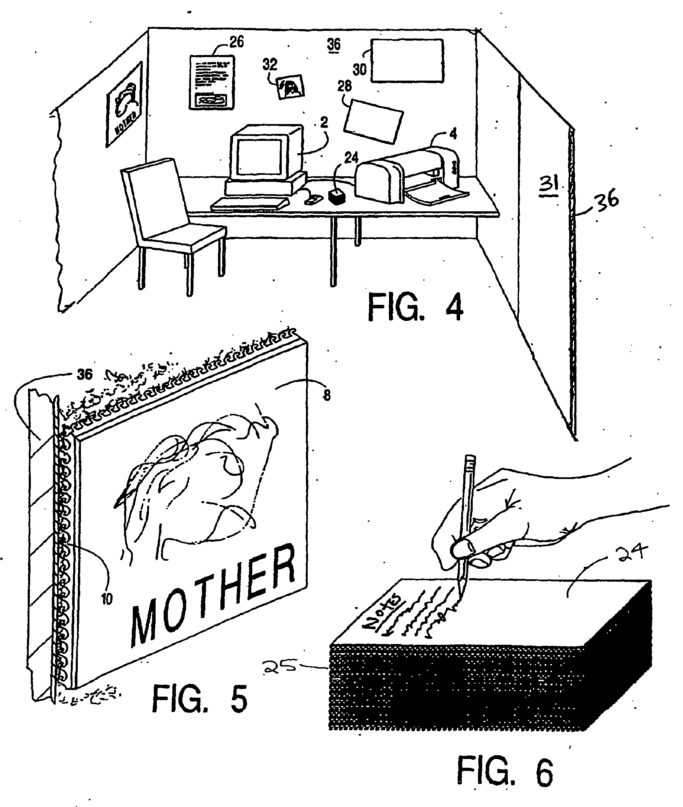

FIGS. 4 and 5 show paper-hook composites hanging on a vertical wall surface 31. It will be seen that release of the hook-backed paper is effected simply by pealing the paper-hook composite sheet along the wall. This disengages the crooks of the hooks from the loops generally without loop damage. Further, by limiting the number of hooks over the field; by fabricating them of relatively weak (low flexural modulus) resin and by suitable hook design, hooks are provided that are adequate to support the paper-hook composite on nearly any surface of wall, that happens to have a lofty or loopy surface and to be detachably released without damage. This is an important consideration when hanging paper objects from loopy surfaces that were not designed to function as hook components.

Printable paper is preferred for forming the composite material. A large multiplicity of hook-form fastener projections can be provided on the back surface of the paper by lamination. In preferred implementations, for this purpose, a cooled, rotating mold roll is provided having inwardly extending, fixed, projection-forming cavities defined in its periphery. To the exterior of the forming roller, molten plastic material is applied for filling the cavities, such that each of the projections individually, or by a common base layer, is laminated to the paper. The laminate is withdrawn from the forming roll in a step that includes withdrawing the molded projections from the cavities. The projections may constitute finished fastener hooks or preform elements that are subjected to subsequent treatment to form fastener hooks.

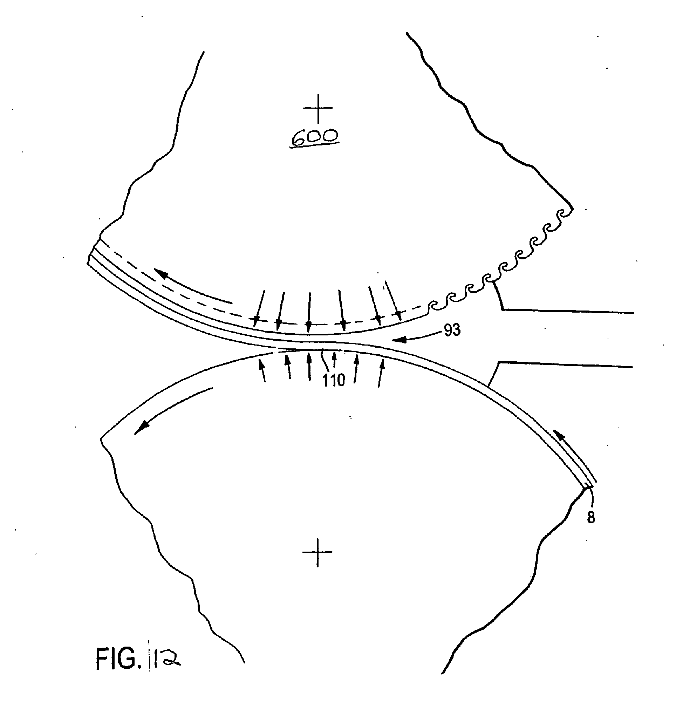

For instance, paper may be laminated *in situ* using a layer of resin that forms the base of the hook material to bond directly to the paper, as taught by Kennedy et al. in U.S. Patent 5,260,015. As shown in FIG. 10, a continuous length of paper 90 is fed into a nip 96 between a mold roll 600 and a pressure roll at the same time as molten plastic 93 is lead into the nip. This paper is thus provided with a continuous hook backing, the paper bonding intimately with the hook fastener to become an integral part of the composite structure with the fastener resin. At the end of the process, the continuous length of paper with the plastic backing is rolled up into supply roll 95. If the projections are molded as fully formed hooks, this can complete the manufacturing process, and the stack is either in-line or later cut into sheets and stacked as in FIG 1, or taken up in rolls or later reformed into rolls of print stock. Later in this text, the reforming of molded preforms will be described. This step too can be performed in-line or as a subsequent operation.

Other applications may require thermal sensitive materials, e.g. coatings, on the paper side of the paper-hook laminate. During manufacture by the *in situ* process of FIG 10, the face of such coated paper is engaged with the chilled surface of the pressure roll and thus is protected from thermal change during passage through the nip and lamination to the hook layer.

Another example of *in situ* lamination is illustrated in U.S. Patent No. 5,441,687, Murasaki et al. Referring to FIG 11, at the front end surface of the upper half of the extrusion nozzle 602 there is an upper arced surface 604, the curve of which mirrors that of the die wheel 600 (mold roll), while at the front end surface of the lower half of the nozzle 602 there is a further lower arced surface 606, the curve of which also mirrors that of the die wheel. A guide channel 608 through which printing paper 90 is introduced is formed in the lower half of the extrusion nozzle 602. A rear pressure roller 610 applies pressure between the sheet of molten resin extruded from the extrusion nozzle, to join paper 90 to the resin.

Thus in operation, the molten resin extruded from the extrusion nozzle 602 is forced into the gap between the die wheel 600 and the lower arced surface 606, and fills up the hook molding cavities and forms a base layer of fixed thickness and width. At the same time as this molding process is taking place, paper 90 is guided up through the backing material guide channel 608 in the extrusion nozzle 602 and is pressed against the surface of the molten base layer by the rear pressure roller 610 to firmly join them together, so that the paper is firmly held by the resin. In some other embodiments of *in situ* lamination the paper is introduced even later in the process but while the hooks are still in their protected position within their mold cavities. In such cases supplemental surface heat may be applied to the resin just prior to application of the loop material by a pressure roll.

Referring back to FIG. 1, stack 14 of sheets 6 form a saleable product. Stack 14 may be packaged in quantities of 50 to 100 sheets in a telescoping box or in quantities of 5 to 50 sheets in a chipboard envelope. Other useful forms of packaging are a paper sleeve and a paper overwrap. The sheets 6 are cut to standard paper sizes to width W ranging from 5 inches to 11.75 inches while length L may range from 5.75 inches to 17 inches. In another implementation, the paper-hook laminate may be used to enter reminders in handwriting. For such implementations, the sheets of paper-hook laminate 6 are cut to standard pad sizes with width W ranging from 1.5 inch to 5 inches and length L from 2 inches to 8 inches. Each sheet 6 has a full unobstructed printable surface 8 on one side, and a field of loop-engageable hooks 10 entirely covering the other side. In particular, sheets of the paper-hook laminate 6 are cut to pre-specified sheet dimensions for individual feeding through inkjet printer 4. By observing particular parameters for given printers, the printer prints upon surface 8 while advancing and maintaining registration with inkjet printer 4 to enable the sheet to have high quality graphic information transferred to it or to have other precise actions performed.

As is known, an inkjet printer places small droplets of ink onto paper to create an image. The dots produced by a desktop printer are extremely small (in some cases, about 50 to 60 microns in diameter), so small that they may be smaller than the diameter of a human hair (70 microns). The dots are positioned very precisely, with resolutions of 2400 or 4800 or more dots per inch (dpi). The dots of inkjet printers often have different colors, they may be closely adjacent and are combined together to create photo-quality images, as in the so-called 4 color process.

For the hook-backed paper described above, printable surface 8 may receive inkjet printing representing graphic information, e.g. a printed pattern representing alpha-numeric symbols, drawings, designs, or similar visual forms. The printing paper or other backing material is selected to provide a surface 8 that is capable of receiving and presenting process color printing, using not substantially overlapped dots of different colors such as Cyan, Yellow, Magenta, and Black (CYMK). Printable surface 8 is capable of being imprinted by the X-Y traverse of a printer, as well as by printers defining a serpentine or other curved path for sheet material.

Hooks 10 at the back of the paper are for hook-to-loop or hook-to-hook fastening, including, e.g., molded hooks, post-formed hooks on molded preforms as will be described. In other cases, heads may be formed on appropriately positioned monofilament stems, or hooks formed by cut-and stretch techniques may be employed. Hooks 10 are of hook-formable composition, typically thermoplastic resin, having sufficient stiffness to enable hook fastening.

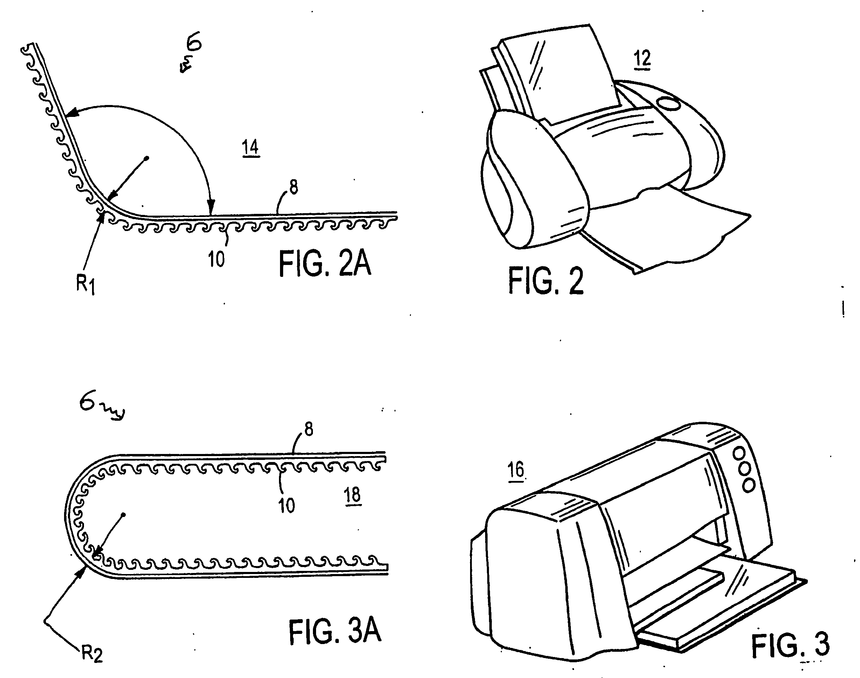

FIGs. 2, 2A, 3, and 3A show inkjet printers having different feed paths to which printable sheets according to the present inventions can conform. Printer 12 has paper feed path 14' that starts from the back while printer 16 has paper feed path 18 that starts from the bottom. In one implementation, paper-hook sheets 6 pass through an angle of 110 degrees and a bend radius of 0.625 inch to be printed by printer 12. In another implementation, paper-hook sheets 6 pass through an angle of 180 degrees and a bend radius of 1.0 inch to be printed by printer 14.

Referring to FIGS. 4-6, many uses of the printable paper-hook composite product are found in an office cubicle 23. Office cubicle 23 has fabric covered walls 36 that have hook engageable loops. Computer 2 holds in memory digital images of a greeting card, a favorite car, a telephone directory, and a photograph. These stored images have been printed out using printer 4 onto different sizes of printable paper-hook composite product 6 to create greeting card 26, car 28, telephone directory 30, and printed 4-color photograph 32, on the left wall of the cubicle. These printed paper-hook composite sheets may then be easily attached to wall 36 by lightly pressing the hook fasteners 20 on the hook side 10 of the paper-hook composite sheets 6 against the loops on the fabric covered walls 36. Despite, in fastener technology terms, there being mis-match between relatively large loops of such cubicle coverings, and the printer-friendly small size of the hooks, adequate hook engagement is found to occur because of the statistically large numbers of opportunities for the very numerous hooks in the set to find loops with which to engage. As shown in FIG. 6, the top sheet 24 of a stack of paper-hook composite sheets in the form of notepad 25 may be written upon and also stuck to a cubicle wall as a reminder note.

Following the same principle, a bulletin board may be formed with hook-engageable light-weight loop material that is laminated to chipboard. The loop material is adhered to the chipboard by a continuous adhesive layer. Permanent printing or designs may be included on the material. Printed pictures or other messages on paper-hook composite sheets are detachably attached to the loop material by hook fasteners.

Referring back to FIG 4, on the right wall 36 are hook-backed strips 31 of conventional width wall paper that has been printed by a conventional wall paper printing machine, with a design selected to the taste of the occupant of the office cubicle. It is detachably affixed to the permanent loop fabric of the walls. It may readily be stripped from the wall, and moved and reapplied to the wall of another cubicle when the occupant moves, and new strips in accordance with the taste of the new occupant of the first cubicle may be put up on the wall.

The utility of printable paper-hook composite material is extended by provisions for printability and runnability with respect to standard inkjet printers for the office or home, or other desired printing apparatus. Printability, as defined above, refers to the faithfulness to which printable medium accepts and displays a printed image. Physical characteristics that define printability for particular purposes are reflectance, dot gain, surface roughness and opacity. As explained above, it has been found that the process of *in situ* lamination as described above substantially preserves the originally selected properties of the paper while applying fasteners or fastener preforms to the back of the printable medium.

This is found to be the case even in the case of selection of paper to display photoquality images. Such implementations have a higher reflectance and lower dot gain than implementations designed for non-photoquality 4-color printing. For photoquality 4 color printing on paper-hook composite sheets, generally the paper side must have a brightness of at least 80 percent and a dot gain of no more than 20 percent. This enables an inkjet printer, for instance, to print on the paper side at least 2400 dots per inch per color with faithful representation of the photo image. For non-photoquality printing on paper-hook composite sheets, the paper side still should have a brightness of at least 40 or 60 percent and a dot gain of no more than 50 percent. To enable an inkjet printer to print with reasonably good quality, employing 200 or 2400 dots per inch total, fibrous papers for effective printing generally employ bleached stock and are calendered to produce a smooth surface. Generally they are also coated with an aqueous mixture of clay or other mineral pigments, which employ natural or synthetic polymers as pigment binders. For ink jet printing, generally such paper has a brightness of 80 percent or greater.

Implementations designed for photoquality 4-color images often are desired to have glossy finish coatings on the paper side to enhance the photo image. Gloss finish is measured by the specular reflection. For this purpose paper is resin coated or cast coated. As noted above, resin coating is a polymeric coating that is extruded on to the paper surface and is designed to produce a glossy surface while cast coating is a paper coating process that is designed to create a smooth glossy surface by pressing the wet coated paper up against a smooth hot dryer drum, in a process by which the smoothness of the drum surface is imparted to the paper surface.

In all of these cases, the selected properties of the paper are found to be substantially preserved in passing through the *in situ* process described. The printability of a printable medium may be measured subjectively by inspecting test images printed on the printable medium.

Runnability, as defined above, is a measure of how well the printable paper-hook composite material feeds through a printer in order to be printed. Physical characteristics that affect runnability of a printable sheet are, in particular, stiffness and thickness. Flatness or freedom from curl, basis weight, and other factors have some influence as is well understood and readily accommodated.

Stiffness relates to the amount of force it takes to bend a paper, and can be measured using the Gurley stiffness test. The overall thickness of the paper-hook composite, in particular, affects the stiffness of the composite, but also needs constraint to enable passage through a given paper path. It is found that combinations of appropriate paper with hook fasteners of limited height, in general of height less than 0.025 inch, preferably less than 0.020 inch (and preferably mini-hooks of about 0.015 inch, or smaller) enable runnability and achieve suitable attachment for indoor uses. Paper-hook composites with mini-hooks of about 0.015 inch height are found to run very satisfactory on many quality papers, while micro-hooks below about 0.010 inch or sub-microhooks below about 0.008 inch are seen to improve runnability and image quality, while still, because of their typically increasingly large number, being sufficiently engageable with even large loops as may be found on the surface of wall cubicles. As with other inkjet print stock, for a printable paper-hook laminate sheet to be fed and printed upon by an inkjet printer, the sheet must also be sufficiently stiff to resist being permanently curled by mechanical operations of the inkjet printer that include rolling the sheet around feed rollers.

For relatively stiff papers such as high gloss photo quality ink jet paper, it is found that the inherent stiffness of the paper can be accommodated by use of a resin having a relatively low flexural modulus, such as below 60,000 pounds per square inch. For instance, film grade low density polyethylene, which has a flexural modulus of about 30,000 psi, may be selected. While such resin is not ordinarily employed in the fastener art because of the lack of fastener strength, it is found to be operable in many applications, such as indoor use, in which a large multiplicity of hooks, such as covering the entire back face, are available to collectively provide the relatively low hooking force needed to support a sheet of paper on the wall. The paper itself may have at least half, and in many cases at least 75 percent, of the Gurley stiffness of the entire paper-hook composite. The base layer of resin connecting the hooks is preferably less than about 0.005 inch in thickness, so as to limit the stiffness of the composite and reduce cost.

Example feed paths for inkjet printers are illustrated in FIGs. 2A and 3A. The composite material has been found to be sufficiently flat to avoid paper jams when stacked in such feeder mechanisms. One method to measure this flatness is to measure how much the paper-hook sheet curls from a flat surface on which the printable sheet is laid paper side up.

While inkjet printers are designed for the runnability characteristics of common office inkjet paper, providing hooks made of resin onto the back of the paper changes the characteristics of this paper. Nevertheless, it is found that a wide variety of papers may be successfully employed. The following printed inkjet paper types have been successfully provided with a field of backing hooks and subsequently run through an inkjet printer: KS-JET-812, Pgloss 68#, ASTROJET, Teslin, MIJ-65-180, and Pacific Inkjet Paper. These papers are designed for inkjet printing and, except for Teslin, are cellulose fibrous papers with coatings. Teslin is a synthetic plastic paper. These inkjet papers were run through the process illustrated in FIG. 10 and the paper-hook composite illustrated in FIG. 9 was created for each of the 6 papers. The resin used was film grade, low density polyethylene, having a flexural modulus of 30,000 psi. The hooks had a density of 566 hooks per square inch. The paper-hook composite sheets were then successfully fed through and printed upon, using the following standard inkjet printers (printing resolution in parentheses): Lexmark Z65 (4800dpi x 1200dpi), Canon S330 (2400dpi x 1200dpi), Cannon i850 (4800dpi x 1200dpi), and HP 3820 (4800dpi x 1200dpi). Thus, the paper-hook composite is runnable and printable on a variety of standard inkjet printers given a hook height of 0.015 inch and a hook backing thickness between 0.0007 inch and 0.0027 inch.

It has been found that the stiffness, measured by the Gurley stiffness test, of the paper-hook composite differs from the stiffness of the paper stock that had no hooks formed on its back. For the printable test samples, the stiffness of the composite had a maximum Gurley stiffness of 1678.3 mg and ranged from 48 percent to 190 percent of the original plain paper. The flatness of the paper-hook composite, although increased, was within tolerable range of less than about 1.5 inch. For the test samples, the change was from a measurably flat paper sheet to a curl with a range from 0.04 inch to 1.56 inch from a level surface. (The curl tendency is the largest displacement of any portion of the paper from the level surface with the paper side up.).

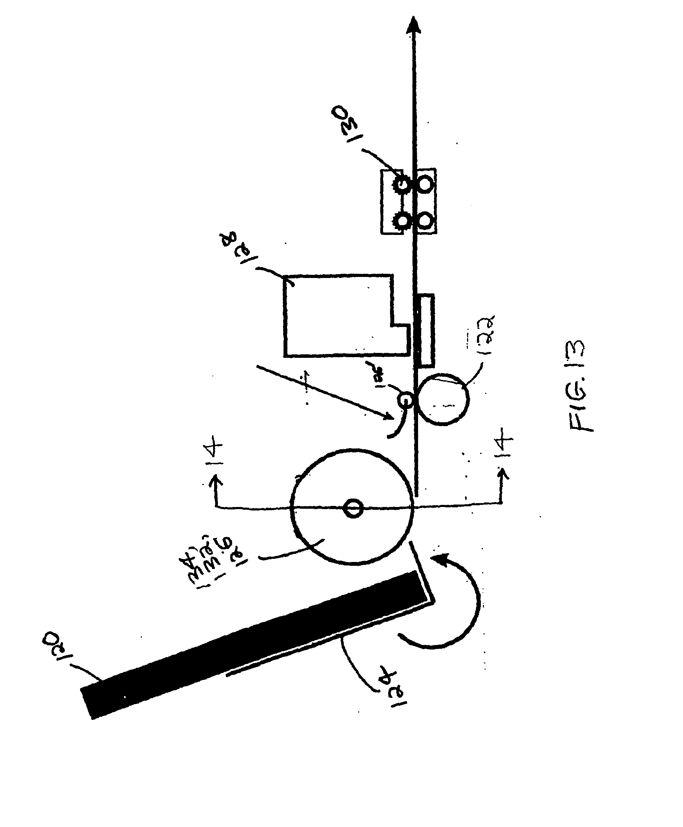

Normally, one would assume that the combination of the hook backing and paper stock should result in a composite that is stiffer than the original paper. But in fact, in some cases, the paper-hook composite was found to be less stiff than the original paper stock. Referring to FIG. 12, it is realized that when resin is extruded into calender roll nip 93, some of the fibrous bonds in the paper become interrupted, such that the paper portion of the composite, and in some cases even the entire composite itself, becomes less stiff. This effect is seen as enabling the printing of paper-hook composite employing paper that ordinarily would be considered to be too stiff to feed through an inkjet printer.

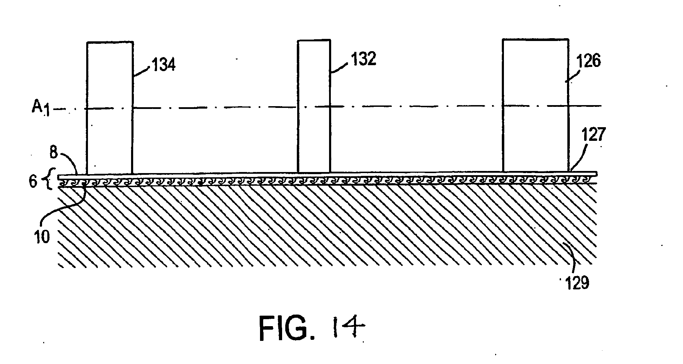

Referring to FIGS. 13 and 14 showing the feed path of the inkjet printer of FIG. 3, a stack 120 of paper with hook backing, as described, is placed in tray 124. To feed a new sheet 6 into the inkjet printer for printing by print head 128, tray 124 rotates forward and parallel drive rollers 126, 132, and 134 move the top composite sheet 6 through nip 127 away from stack 120 to pull the paper around the 110 degree paper feed path shown in FIG. 3A toward drive roller 122, using the friction of drive roller 126 against the sheet 6. Sheet 6 then moves along drive roller 122 and is printed upon by print head 128. Lastly, out-feed guide rollers 130 move the paper out of the printer. Platen 129 holds the paper against drive rollers 126, 132, and 134 for registration control during the printing process. If the composite sheet is too thick, the paper-hook composite will not feed properly because it will fold in nip 127. Success has been achieved with the printers mentioned, and it is realized that feeding problems can be avoided by strategic placement of bands of hook outside of the known nip patterns of printers, and in particular along the long margins of the sheet path, while not placing hooks, or even resin, over the broad printable space in between the band of hooks. This has the desired effect of reducing the thickness of the sheet in the nip area under drive rollers 126, 132, and 134 to resolve printer feed problems.

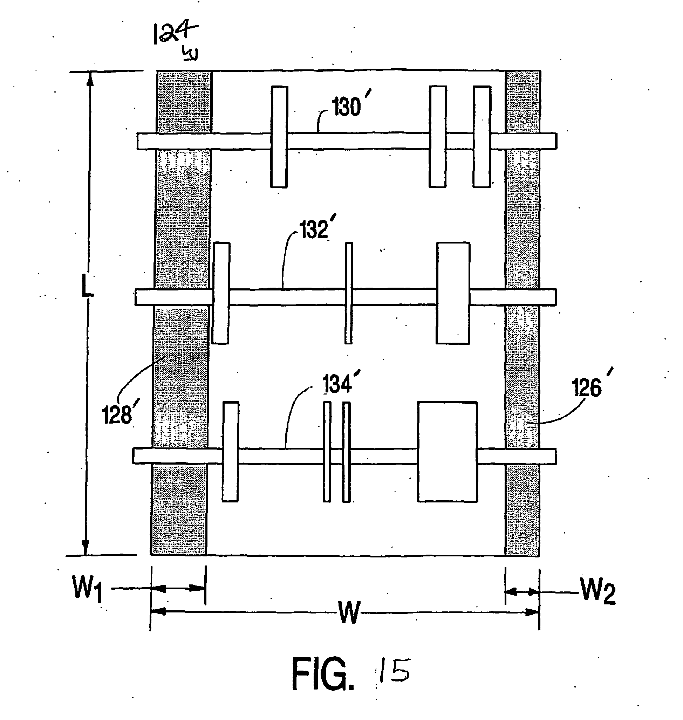

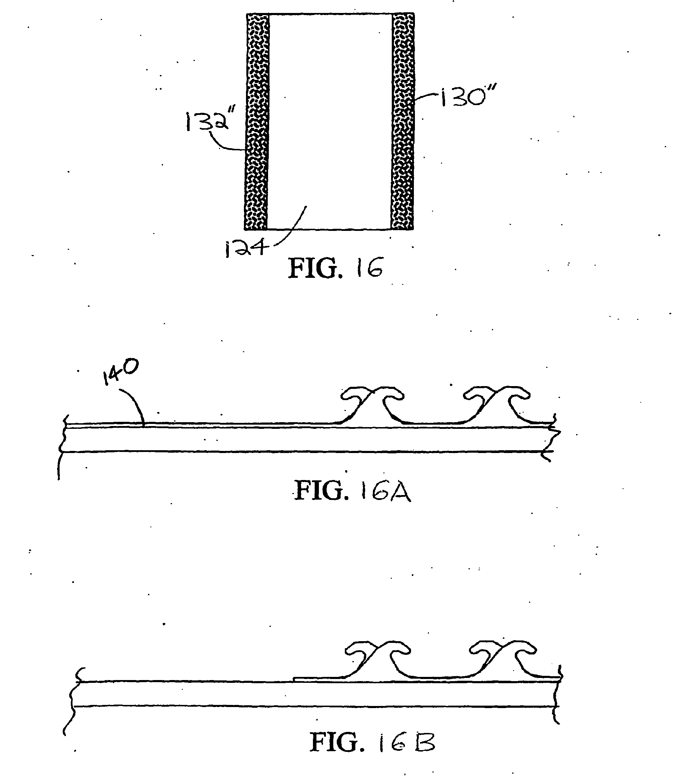

Thus, in some examples, the hooks do not completely cover a surface obverse to the printable surface. The strategic placement of the hook bands is based upon the observed location of typical printer drive arrangements. FIG 15 shows a top view of drive roller sets 130', 132', and 134' for a number of different standard inkjet printers, superimposed on 8.5 inch by 11 inch sheet 124. These printers include HP 3820 (corresponding to drive roller set 130'), Canon i850 (corresponding to drive roller set 132'), and Canon 330 (corresponding to drive roller set 134'). As shown, the drive roller sets 130', 132', and 134' do not contact sheet 124 on a left margin 128' and a right margin 126' of the paper path. The left margin 128' is W₁ wide and the right margin 126' is W₂ wide. With the set of printers examined, W₁ is 1.5 inch and W₂ is 1.125 inch. Bands of hooks placed in these margins do not come into contact with rollers 120 and 122. Another problem might be thought to be caused by the contact between the out-feed rollers and the hooks. It is found that another set of left and right margins does not contact either the drive or out feed rollers, hence placement of the band only in these regions prevents contact between the field of hooks and out feed rollers. Thus, in those systems in which the combination of drive and out feed rollers controls the paper relative to print head 128, registration control (i.e., accuracy of printing along the feed path) can be maintained by strategically restricting hooks to left and right margins that are determined based on the placement of drive and out feed rollers for particular printers. Resulting paper-hook composite sheet 134, illustrated in FIG. 16, has hook strips 130" and 132" over the left and right margins based on the placement of drive and out feed rollers for particular printers.

In one example, illustrated by FIG 16A, the base resin layer of the hook strips is a continuous strip 140 that extends across the width of the paper. In a second example, illustrated by FIG 16B, the sheet portion within the margins is plain paper whose thickness is designed to feed through standard printers. This reduces the thickness of the sheet moving through the printer nip under drive rollers 126, 132, and 134 even further to help eliminate printer feed problems. For forming the product of FIG 16A, a machine-wide supply of molten resin is introduced to the mold roll in the implementation of FIG 10 or 11, but operable mold cavities of the mold roll are limited to the desired marginal bands. Between them a solid resin layer is formed. In the case of FIG. 16B, molten resin is supplied to the mold roll only in the regions where the hook bands are desired. In this case, the entire surface of the mold roll may be covered with hook cavities, the placement of the bands of hooks on the product being dependent upon the places where resin is furnished.

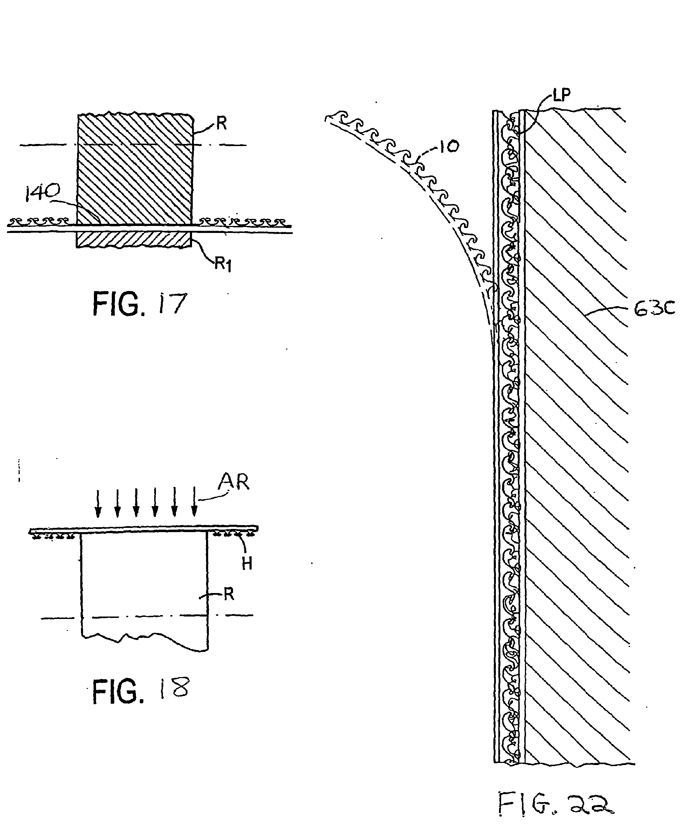

FIG. 17 shows rotatable nip rolls R and R₁ engaging the composite of FIG. 16 in the region not covered by hooks. The engaged region of the paper may be plain or carry a flat layer 140 of resin of which the hooks are formed. Only the regions lying beyond the rolls carry hooks as described, so the hooks are protected from the nip pressure. Roll R or R₁ may be a printing roll, which can be a rigid roll bearing upon the substrate with high pressure. Thus, the substrate may be printed with the high pressure of offset techniques, etc. Likewise, rolls R or R₁ or both may carry to the nip a coating material that is applied to the paper. Further, rolls R or R₁ may comprise calender rolls, and may even be mold rolls for molding other features on the composite without disturbing the previously formed hooks. The hooks may be in continuous bands in the machine direction or may be discontinuous patches distributed along the length of the composite within the bounds of a defined band. Although shown as molded hooks facing in lateral directions, it will be understood that the hooks will, in many instances, be molded to extend in the direction of extent of their corresponding bands. Roll R may be provided with a peripheral groove for accommodating a band of hooks (not shown) extending along the centerline of the paper, if needed. Roll R₁ may be provided with a groove for accommodating one or more bands of hooks on the opposite side of the paper.

FIG. 18 illustrates a single roll, hook-protective arrangement, in which pressure AR is applied through the non-hook bearing region of the composite to the roll R. AR may alternatively represent a treatment of the composite, such as printing or coating, after the hooks have been applied. Thus, precise positioning of the composite, achievable by being trained over a roll, is achieved despite presence of the preformed hooks. Other examples of treatment AR include exposure to radiation, for instance, light exposure of photo-sensitive material, and cross-linking radiation, e.g. ultraviolet laser scanning or laser writing, or electron beams; exposure to air or gas such as by jets, including flames, or to other airborne material, such as that of a controlled reactive atmosphere or to metal vapor for producing thin metal coating; exposure to liquid coating conditions, including spray coating, liquid curtain, and immersion (in particular, the technique enables application to fine tolerances of the gelatins of a photo-developable composite coating, including also the filter layers and the top clear coat); and exposure to printing conditions such as to non-contact printing in which the paper is precisely positioned, inkjet printing, xerographic (electrostatic printing such as by use of toner particles), or to photo development.

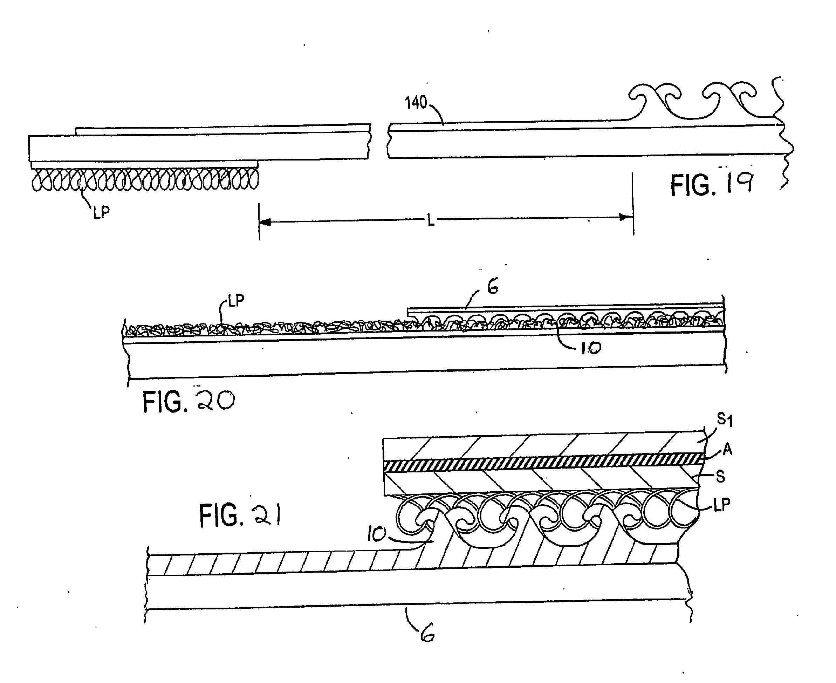

FIG. 19 illustrates a paper-hook laminate, such as that shown in FIG. 16A, with a loop material LP located a distance L from the band of hooks. By selecting length L to extend about an object and appropriately selecting the extent of the hook and loop components, the composite may be sized to form advertising sleeves that carry photo reproductions or to place point of purchase graphics about products on display, or to form printed political posters, or to place about a part of the human body, such as the head, to form a decorative crown that bears, for instance, the photographic representation of someone being celebrated, or around the wrist to form an inexpensive wristlet, or around other body parts. FIG. 20 shows a section of a wristlet carrying loop material LP on its exterior surface. A cameo photograph printed on the paper-hook laminate 6 is shown with its hooks 10 removably engaged in the loop.

FIG. 21 illustrates the material of FIG. 16A in which the hooks 10 are shown engaged upon a detached patch of loop material LP, such as needled non-woven loop material available as Loop L3311 from Velcro USA Inc. This loop material is shown laminated to a paper substrate S. On the back of the paper S is carried pressure sensitive adhesive A, while the adhesive on its opposite surface carries a release paper carrying a silicon release coat on a substrate S₁. The adhesive and hook-to-loop engagement are cooperatively designed to enable peeling release of the hooks from the loops after the contact adhesive has been exposed and secured to a surface, such as a wall, that is intended to support the paper-hook composite. A photograph may be, for instance, photo printed on the paper side of the hook-paper composite 6.

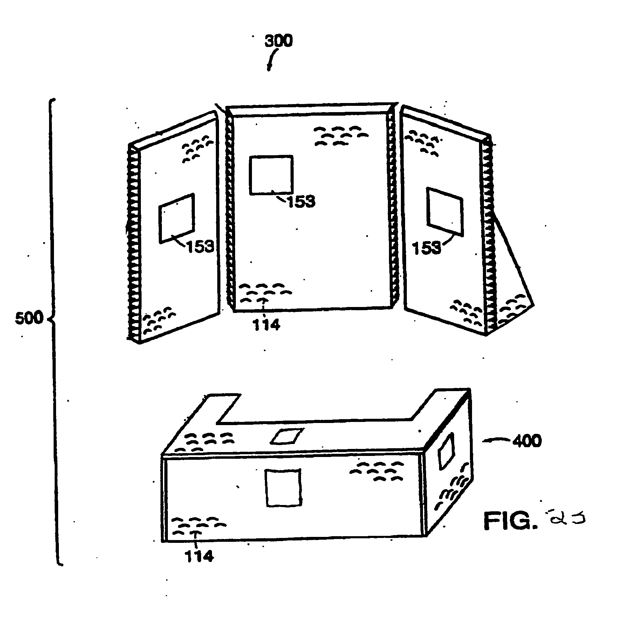

FIG. 22 shows a wall 630 to which loop material LP has been applied. A paper-hook composite is shown bearing "J" form hooks. All hooks of the entire backing are directed in the same direction, extending down the wall surface. For removal of the composite, peeling from the top, especially with an added slight upward force, facilitates release of the hooks from the loops, and thus serves to assist in protecting the loops from damage. Loops that need such protection include, but are not restricted to, loops on surfaces such as wall coverings or apparel, which are not designed to serve as loop components of a fastener.

In some implementations of the concepts discussed above, it is, contrary to typical desires to maximize fastening strength, preferable to design and arrange the hooks to provide advantageously low peel strength. Papers or photographs backed by such "degraded" hooks can be attached, detached, and reattached to conventional fabrics that are not fabricated to serve as fasteners. Examples are needle punched fabrics serving as automobile headliners, fabric wall papers, and relatively delicate grades of apparel.

One approach to lowering hook peel strength is to select a thermoplastic resin not conventionally recommended for forming hook fasteners. It is desirable that the resin for this purpose not have a flexural modulus greater than about 35,000 psi. Material having a flexural modulus of 30,000 psi, such as film grade, low density polyethylene, is recommended. It is anticipated that resins with flexural modulus of 25,000 psi, or indeed 20,000 psi will also, under certain circumstances, be advantageous in protecting surfaces to which the hook-backed printable paper is engaged.

By reducing the flexural modulus and strength of the hooks or preforms, the risk of breaking off molded features during demolding may be increased. To offset this tendency, mold tooling with very smooth surfaces is recommended, such as by forming tooling rings by the chemical etch process disclosed in U.S. 6,163,939. Another technique is to form simple stems *in situ* without crooks, of form easily released from mold cavities. As a post-molding operation, these stems are then formed into hooks, for instance using slight flat topping, taking care not to form aggressive hooks in so doing. For instance, tooling such as a stationary drag surface or the surface of a flat-topping roll operating at surface speed significantly mismatched with the surface speed of the stems passing by can have the desired effects. The softened stem material is dragged in one direction, forming a "J" hook. Furthermore, the desired weak or ultra-weak loop-engageable hooks can be formed with modified crooks that are thin, or less aggressively angled, or smaller than conventional, and thus can more readily release from the loop material.

To similar effect, in certain circumstances, the number of hooks per unit area is intentionally reduced, such as to as low as 100 hooks per square inch. This reduced hook density supports exceedingly light paper articles in conditions where light disturbance effects or forces are anticipated. Non-hook protuberances may be molded in places ordinarily taken by adjacent hooks to give the composite a generally uniform effective thickness.

Referring next to FIG. 23, a trade show booth 500 includes a table 400 and a self supporting floor display system 300. All are covered with a non-woven material 114 having loops. Printed paper sheets 153 with advertising and promotional literature are attached to the various surfaces. Wall paper stock may also be formed as the paper-hook laminate discussed above, and subsequently printed as by printing a continuous length of hook-backed wallpaper stock using high speed, offset printing. This wall paper is advantageous to attach to a wall having low-lying, hook-engageable light-weight material such as needled, stretched and binder coated non-woven material available from Velcro USA, Inc. as loop L3311.

Referring to FIG. 24, page 202 of a scrapbook 200 is formed by laminating hook-engageable material sheet 114, such as a needled loop product, to a sheet of paper 208, or the loop material that has suitable binder for page stability is employed plain. The material sheets are cut to form pages 202 of the desired book size and bound to form the scrapbook 200. Such scrapbooks are useful to organize displayed objects 204 such as printed paper-hook laminate as described or photos with loop-engageable hook fasteners on their back, to be described. Objects 204 are removably attached to the hook-engageable surface 114 of the pages with the hook fasteners 104 on the back of the paper-hook composites. Because of the fastening system, the specific arrangement of the displayed items can be easily changed by peeling and readjusting their location and adding new materials.

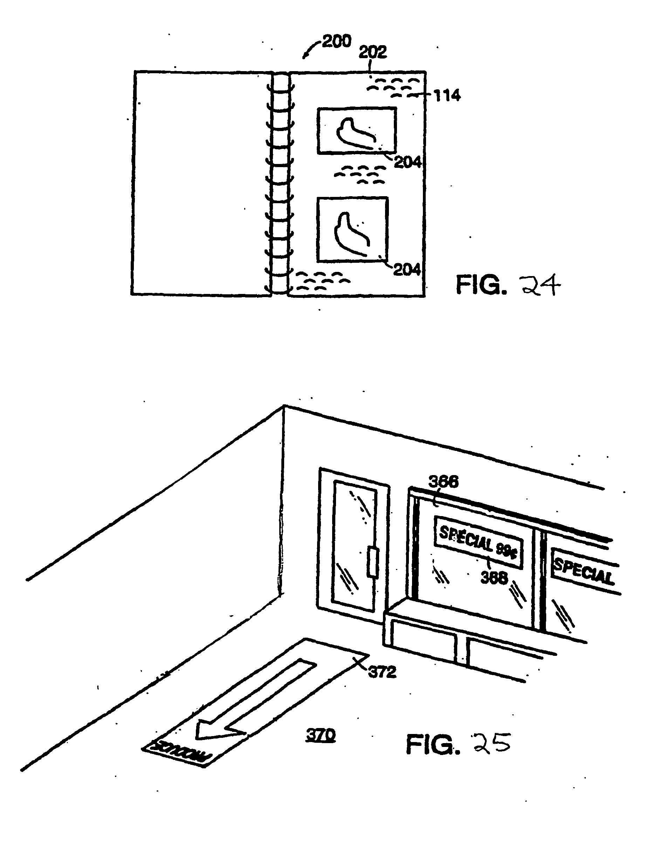

In other examples shown in FIG. 25, a printed paper-hook composite placard 368 is attached to loop material permanently secured by adhesive to a store-front window 366 for displaying a promotional message, price, advertisement, or a seasonal theme. Likewise, a durable paper floor runner 372 created from printed paper, e.g. a paper of durable synthetic fibers, with a hook backing is printed with a message or directions. Floor runner 370 detachably attaches to the loops of carpet floor 370.

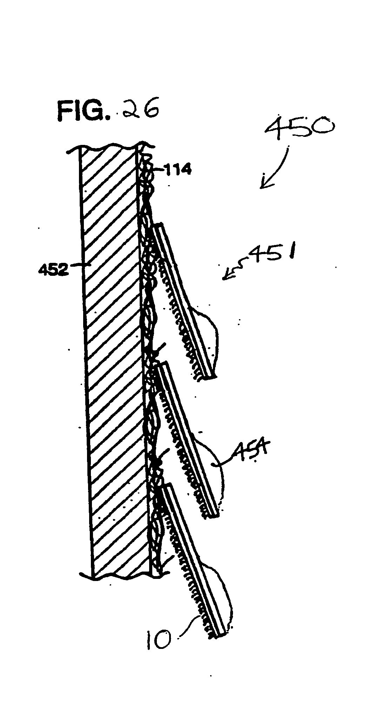

Referring to FIG. 26, a pendant display 450 includes a support 452 of corrugated board, chipboard or synthetic resin foam covered with a loop material 114. Individual packages 451 are mounted to the support by hooks 10 on their obverse sides. Each package includes a backing card of paper stock laminated with hook resin to form the above-described hook-paper laminate, and can be printed with logo and product information, even on the obverse side. For reading printing through the hook resin, suitably non-opaque resin can be used to mold the hooks, and the card stock can be preprinted before lamination. Each package 451 is provided with a blister pack holding merchandise 454, such as, razor blades, cards, or candy, among others.

The hook-paper composite discussed above may be printed by larger scale inkjet printers for applications such as billboard images. For example, the Utra-Vu® 5300 and 5330 printers, available from Vutek of Meredith, New Hampshire, is suitable for printing upon billboard material. In similar fashion, large engineering or architectural drawings may be printed on hook-backed drawing paper by conventional inkjet drawing printers, and readily mounted at office sites of new construction or on naval vessels in case of damage control efforts. Likewise, large patterns for engaging cloth and guiding its cutting may be produced for seamstresses and the sewing trades.

Paper-hook composite sheet may also be fashioned in the form of printing paper or label stock. Bar codes may be printed on the paper-hook composite using a thermal transfer printer. Thermal printing involves a heat transfer from a thermal print head to a transfer tape, the composition of which, at heated points, melts and transfers to the paper. As the heating elements form text and graphics, the text and graphics are thus transferred and can be seen. The thermal head consists of a row of miniature heating elements that is constantly pressed against the transfer tape in contact with the paper. Bar codes are a form of graphic images. Printed bar codes with paper-hook laminate with loop engageable hooks may be detachably attached to merchandise with fabric such as carpets and clothing. The paper-hook composite sheet can be rolled up in supply roll and follow the feed path of the printer.

Electrostatic copy systems may also be employed to copy color or black and white images onto paper-hook composite sheets.

Another example uses flexographic printing to print images on continuous length paper-hook composite material. Such high speed printing using a stack press can include color printing on the paper-hook composite material to produce wallpaper with hook backing. 'Center impression' and 'in line' presses can also be used. Flexographic printing on a substrate includes applying a low viscosity flexographic ink or dye to a substrate and subjecting the applied ink or dye to conditions sufficient to fix the print onto the substrate. For the paper-hook laminate, an elastomerically resilient roll contacts the paper without harm to the hooks at the back.

In another implementation, the paper-hook composite 6 may have characteristics selected so that a person may hand write information on the paper side 8 as shown in FIG. 6 with ball point pen, or ink pen. This is useful for notepad applications where handwritten notes may be detachably attached to fabric covered walls of offices or bulletin boards, as during brainstorming and idea-gathering activities. In another implementation, a stack of paper-hook composite sheets may be hole punched to fit in a three ring binder. Notes may be written on the sheets, the sheets may have printed images, or notes may be written on printed sheets.

In another implementation, photo paper may be substituted for printable or writeable paper to form the paper-hook composite. The photochemicals may be applied subsequent to *in situ* lamination, or by chilled roll protection, before. Photos thus may be developed (photo printed) on the paper with hook backing. This enables true photographs to be detachably attached to fabric loop-bearing surfaces such as scrapbooks, cubicle walls, or bulletin boards. After application of hooks to the back of paper as previously described, the composite may be processed in the dark into photo-printable paper (photo developable). A process is thus provided for producing photo developable paper for photos and the like, comprising providing a paper substrate useful in such product, applying a field of hooks to the back of the paper (or coated paper), preferably by *in situ* lamination, and thereafter, in the dark, processing the substrate by applying coatings that render the surface of the paper photo developable. The material may be provided in roll form or the process may further include cutting the fabricated continuous material into sheets, stacking and packaging with opaque wrapping, still in the dark. Photo paper typically is coated front and back with polyethylene. By applying hooks of polyethylene, with a common polyethylene base layer for the hooks, covering the back of the paper, the usual polyethylene coat on the back can be omitted. The paper with hooks on the back can be treated in the usual way by applying various gelatin layers including silver halide, which, for colored photos, has dyes attached, plus filter layers that let selected colors through that act upon the dyes (CYMK), plus a final clear coat.

In certain cases, the thicknesses of back coatings of photo developable paper (such as the aforementioned gelatin layers) must be tightly defined for proper development of photos on the paper. It is difficult to define sufficiently these thicknesses when the photo developable paper has a hook backing. Advantageously for forming close tolerance layers, as here, hooks are provided within the bounds of minimal bands, either continuously or at selected places along the bands. Hooks are molded only in these regions onto the back of paper, in this case the paper chosen to be photo developable. The bands extend along machine-direction at margins, such as in FIG 16. Inside these margins, the necessary gelatin layers are applied to the face of the photo paper. Thickness accuracy is achieved by the non-hook portion of the composite being trained about a reference roll during coating or passing through a coating nip. In the case illustrated by FIG 16A in which a continuous, polyethylene hook backing is formed between the margins, the usual polyethylene coating is omitted and gelatin layers are applied along with a clear coat in-between the margins.

When *in situ* formation of molded hooks is accomplished with a roll formed by many mold-forming rings, slight outer diameter variations and eccentricities of the mold or "tool" rings that form the mold roll may leave slight marks in the paper that show up in photoquality images, in particular on glossy surfaces. It has been found that such marking does not destroy the utility of the composite for many practical photographic uses. The final hook shapes may also be formed in a two-stage forming operation to avoid any problem the thin tool ring marks might cause in very demanding circumstances. First, stem preforms are formed as straight shafts using a solid, polished calender roll having straight hole-shaped molds. Second, the preforms, thus *in situ* laminated onto the paper, are subject to post-molding treatment. For instance, the stems are heated preferably by a non-contact heat source while the paper side is engaged on a chilled roll. The heated portion then makes contact with a press surface to deform the stems and loop-engageable formations such as flat tops or mushroom shaped hooks. These mushroom shaped hooks grip loops in fabric material in multiple directions so, depending on head size, the gripping strength can be higher than with J-form hooks. This grip strength is advantageous in applications where the paper-hook composite needs to cling more tightly to the loop surface, or to be secure against detaching forces occurring from all directions. Such applications may include labels and billboards that are placed outdoors in windy conditions. Details about useful methods of post-treating stems to form fastener elements, and useful mushroom-type fastener element characteristics, can be found in U.S. Patent No. 6,248,276.

In another method of manufacturing the paper-hook composite material, the hook material is manufactured using extrusion and a mold-roll calender stack without simultaneously laminating to printable paper. In a secondary operation, this preformed hook material is laminated to printable paper using adhesive. First, the hook material is coated with a compatible adhesive resin or chemistry. The adhesive coating may be applied using spray coat, curtain coat, roll coat, and any other of various coating methods.

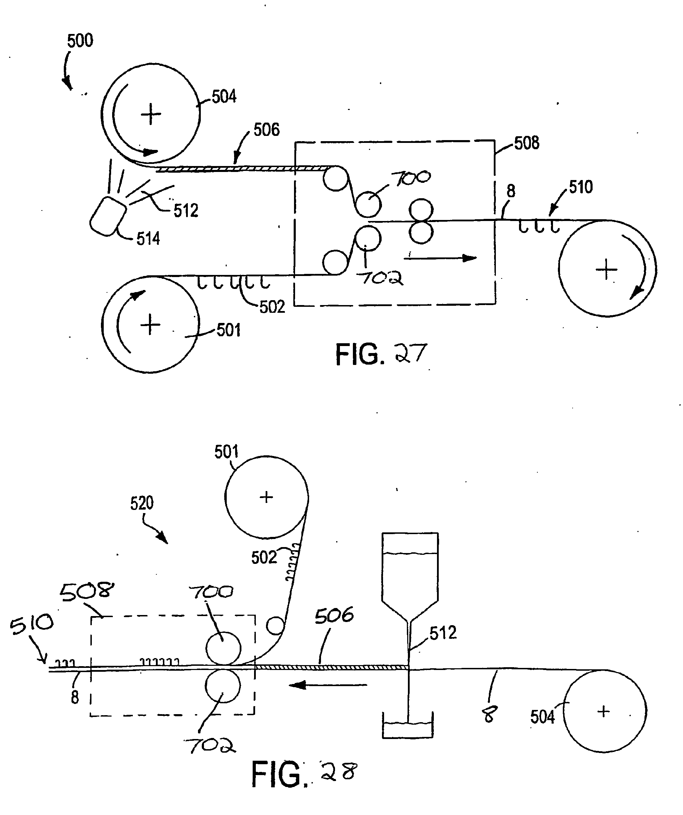

FIG. 27 illustrates a spray coating and laminating technique using machine 500. Starting from the left, roll 501 unwinds preformed hook material 502 while simultaneously roll 504 unwinds printable paper 506. Spray 514 sprays adhesive 512 onto the back of printable paper 8 forming printable paper with adhesive 506. Next, the two webs of hooks and paper, one being coated (or both being coated if employing rubber based contact adhesion), are brought into intimate contact using two calender rolls 700, 702 to adhere the two webs to form paper-hook composite 510. The pressure between the two calender rolls can be fairly light, protective of the hooks, e.g. 1200 pounds per square inch (psi) or less. As an option depending on the adhesive 512, a curing oven or heater 508 can be used to cure the adhesive 512 to permanently laminate the two webs of hooks and paper.

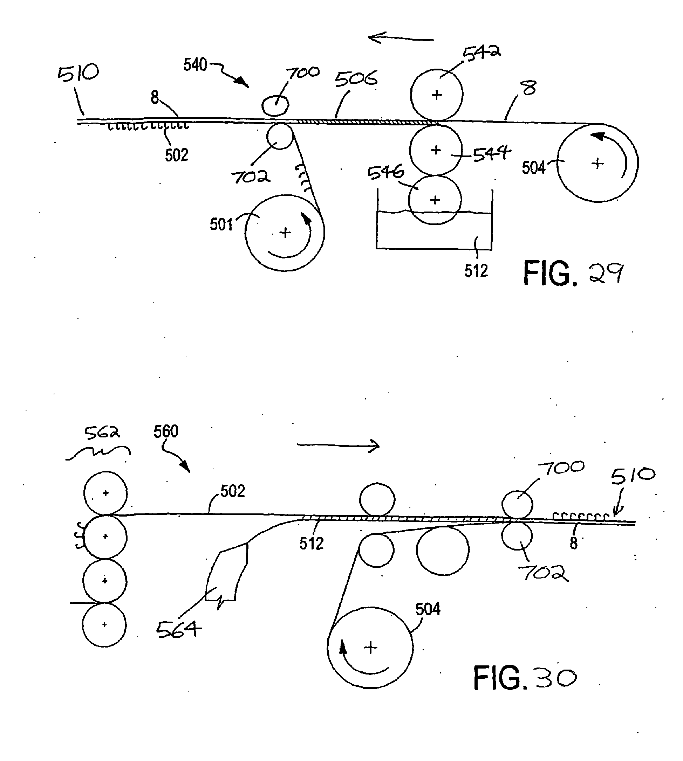

FIG. 28 illustrates a curtain coating technique using machine 520. Starting from the right, roll 504 unwinds printable paper 8 into a continuous stream of adhesive 512 creating printable paper with adhesive 506. Roll 501 unwinds preformed hook material 502. Next, according to the description for FIG. 27, the two webs of hooks and paper are laminated to form paper-hook composite 510.

FIG. 29 illustrates a roll coating technique using machine 540. Starting from the right, roll 504 unwinds printable paper 8 which receives a coating of adhesive 512 using rollers 542, 544, and 546 to create printable paper with adhesive 506. Roll 501 unwinds preformed hook material 502. Next, according to the description for FIG. 27, the two webs of hooks and paper are laminated to form paper-hook composite 510.

FIG. 30 illustrates an extruding and laminating technique using machine 560. Starting from the left, calender stack 562 forms hook material 502. Hook material 502 is sprayed with adhesive 512 by sprayer 564. Roll 504 unwinds printable paper 8. Next, according to the description for FIG. 27, the two webs of hooks and paper are laminated to form paper-hook composite 510.

The preformed hook material may be stretched in the cross machine direction, as discussed in U.S. Pat. No. 6,035,498, prior to the lamination illustrated in FIGs. 27-30. After the hook material is stretched, the hook material is laminated with printable paper to form a paper-hook composite. For example, a continuous length of hook material is formed 12 inches wide, as by the calender molding machine of U.S. 4,794,028. Next, the 12 inch wide material is stretched to 36 to 48 inches wide. This stretched hook material is then laminated to printable paper using adhesives such as described above. Stretching the hook material produces a reduction in hook density as the product has been stretched between rows of hooks. This implementation is useful for light duty applications where strong attachment between hooks and loops is not required. A benefit of this alternate manufacturing method is that the slow extrusion process produces hook material that is stretched to create much wider material so that the entire manufacturing process achieves a high throughput of paper-hook material at lowered expense.

In some cases, a second material is provided as an adhesive tie layer between a continuous length of preformed hook material and the printable paper. A thin inexpensive foam layer may serve as a tie layer. When flame heated to slightly melt its surface, it becomes a glue to act between the hook material and paper when relatively light, light laminating pressure is applied to preserve the structure of the foam (when it is desired) as well as to protect the hooks. A residue thickness of the foam can additionally provides a degree of cushioning to the finished paper-hook composite. When initially formed, the foam sheet may have a thickness of 1/16 inch or less. In the process, the back of the preformed hook material receives an extruded coating of foam or foamable resin, either open cell or closed cell foam being suitable for flame lamination and bonding with printable paper. Next, the exposed surface of the foam is melted using a flame. Next, the hook material is laminated with the tackified foam to the printable paper using low pressure calender rolls with a nip pressure of no more than 1200 pounds per square inch (psi) to avoid crushing the hooks. In some implementations, this lamination is done using an interference of 1/32 inch or less between the overall thickness of the materials and the gap of the nip between the calender rolls. The melted surface of the foam engages and binds the paper surface, the foam resin serving as a glue. Upon cooling, the product is taken up in a roll. Poly Vinyl Chloride (PVC) or Acrylonitrile Butadiene Styrene (ABS) may be used to mold the preformed hook material. In this case, the backing of the hook material is softened to tacky state using a tetrahydrofuran (THF) solvent, which is adhered to the back of the printable paper.

Synthetic paper, comprised of blends of polyethylene and filler material such as silica, is commonly used as printable medium that has extra benefits of strength and being waterproof. This synthetic paper is printable by inkjet printers, laser printers, and flexographic printers, and is "Quality Printable" as defined above. Such synthetic paper is available commercially as Teslin® from PPG of Pittsburgh, PA, being manufactured under U.S. Patent 4,861,644 and European Patent 0289,859B1. A resin formed of a typical printable paper blend of polyethylene and inert fillers may be co-extruded with the hook resin into the laminating gap of the machines of FIGS. 10 and 11 to form a paper-hook composite material that has one layer of quality printable, synthetic paper and another layer of hook material. The printable polyethylene blend may also be extruded to the back of the hook web as a secondary operation after the hooks have been formed. The hooks and the printable synthetic paper layer may also be formed of the printable polyethylene blend. Again, the weakness of hooks thus formed is seen to be readily tolerable because of the enormous number of hooks available to engage and hold the light-weight composite material.

Extrudable, adhesive resin may also be used as a tie layer between the preformed hook material and printing paper to form desirable paper-hook laminate print stock. In one such implementation, hooks are preformed from polyethylene resin using molding techniques already described. In a subsequent operation, the side of the hook material obverse to the hooks is heated slightly and printing paper is laminated to the back of the hook material. The slightly melted polyethylene forms a bond with the printing paper.

In another implementation, a separate resin that is extrudable and adheres to paper is co-extruded with the hook resin to form an adhesive backing or tie layer upon the back of the hook material. Such extrudable and adhesive resin is available commercially as Bynell® from DuPont of Wilmington, DE. After the first operation to form the hook material with adhesive backing is finished, quality printable paper is laminated to the back side of the hook material.

A number of embodiments of the invention have been described. It will be understood that many modifications may be made without departing from the scope of the invention. Accordingly, other embodiments are within the scope of the following claims.

## Claims

1. A paper-hook composite product (6) having a paper side (8) and a hook fastener side (10), the hook fastener side having a field of fastener hooks (20), **characterized in that** the paper side (8) has a surface formed to be photo-developable or photo-quality printable while the fastener hooks are present on the obverse side.

2. The product of claim 1 wherein the hooks (20) have stems and heads, and at least the stems being of molded form or the stems and the heads being of molded form.

3. The product of claim 1 or 2 wherein the paper (8) is white and has a brightness of at least 40 percent, preferably at least 60 percent, more preferably at least 80 percent.

4. The product of any of the foregoing claims wherein the paper (8) has characteristics selected to receive and faithfully present ink dot density of at least 200 dots per inch (dpi) (78.74 dots per cm or dpc) or 600 dpi (236.22 dpc) or 1600 dpi (629.92 dpc) or 2600 dpi (1023.62 dpc).

5. The product of any of the foregoing claims wherein the paper (8) has properties selected to be printable by process printing employing more than two colors, preferably at least four colors.

6. The product of any of the foregoing claims wherein the paper (8) has a glossy finish, preferably with no more than 6 micro inch surface roughness (15.24 x 10⁻⁶cm surface roughness) and preferably having at least 60 percent specular reflectance.

7. The product of any of the foregoing claims in which the hooks are formed with a backing layer of thermoplastic resin having a flexural modulus between about 15,000 and 60,000 pounds per square inch (psi) (1.03421x10⁸ to 4.13685x10⁸ pascals), in certain preferred cases about 30,000 psi (2.06843x10⁸ pascals), preferably the resin being film grade, low density polyethylene.

8. The product of any of the foregoing claims having a total thickness of no more than 0.035 inch (0.89 mm), preferably no more than about 0.025 inch (0.635 mm).

9. The product of any of the foregoing claims capable of bending about a bend radius of less than about 1.5 inch (3.81 cm) to feed through a computer digital printing apparatus, such as a desk-top inkjet printer, to enable non-contact printing, preferably the product having a bending characteristic permitting elastic bending about a bend radius of less than about 0.8 inch (20.32 mm), and preferably the product having the characteristic that, when lying on a flat surface with its paper side up, any portion of the product does not curl to a height more than about 1.5 inches (3.81 cm) from the flat surface.

10. The product of any of the foregoing claims in the form of a laminate, wherein the paper is preformed and wherein the paper side is laminated to the side of a base layer obverse to the side from which the field of hooks extends, the lamination being either direct or via one or more intervening layers, preferably the paper being laminated by an *in situ* laminating process in which the paper is laminated directly or indirectly to a resinous layer while molding the stem; or molding completed hooks having stems and heads to the opposite side of the layer.

11. The product of any of the foregoing claims in which the obverse side is covered entirely with hooks, preferably loop-engageable hooks.

12. The product of any of claims 1 to 10 in which the hooks are presented as a plurality of bands of hooks, preferably loop-engageable hooks.

13. The product of claim 12 configured to be printable by an offset printer with a print roll on a first side of the paper and a pressure roll on the other side of the paper positioned between the bands containing hooks such that the hooks are not crushed by the offset printer during a printing process.

14. The product of any of the foregoing claims to which loop material, preferably a paper-loop laminate comprising needled, stretched and stabilized non-woven material, is applied to the hook material and adapted to be transferred to a surface upon which it is wished to secure the composite.

15. The product of any of the foregoing claims wherein the hooks are located in dots or patches corresponding with a desired end use.

16. The product of any of the foregoing claims **characterized in that**, when held vertically from an upper edge, no portion of the product curls more than 0.5 inch (1.27 cm) laterally from a vertical plane containing the held edge.

17. The product of any of the foregoing claims in which the hook fastener side is molded from plastic resin having a characteristic of thermal shrinkage from melting temperature to room temperature no greater than 0.005 inches/inch (0.005 cm/cm).

18. The product of any of the foregoing claims in which the product is capable of feeding through a thermal printer to print a bar code.

19. A product comprising a hook fastener tape laminated face-to-face with a printable medium, wherein the hook fastener tape comprises an array of fastener elements having stems integrally formed with and extending from one face of a resin base, the resin base being in laterally stretched condition as laminated to the printable medium.

20. The product of claim 19 in which the printable medium is a plastic sheet, preferably vinyl.

21. The product of claim 19 in which the printable medium is a paper sheet, such as a paper sheet cut to the size of an architectural drawing sheet.

22. The product of any of claims 19 to 21 in which the hook fastener tape comprises molded stems that are flat topped, the stems having been acted upon by forming action to form fastener heads, either before or after the resin base is permanently stretched.

23. The product of any of claims 19 to 22 of a width and length suitable for displaying bill board images.

24. A method of producing a fastener laminate material, the method comprising introducing molten resin to a gap defined adjacent a surface of a molding roll defining an array of cavities, such that pressure in the gap forces the resin into the cavities to mold an array of stems extending integrally from a sheet of resin, and permanently laminating the sheet of resin to a preformed sheet of paper,
**characterized in that**
as bonded to the resin in the laminate material, a broad side of the preformed sheet is exposed, and wherein the exposed side of the preformed sheet has a surface suitable for printing or writing thereupon, or for developing photographic images thereupon such that the fastener laminate material has a photo-quality printable or photo developable side and a hook fastener side.

25. The method of claim 24 in which the preformed sheet of paper is introduced to the gap along with the molten resin, such that the resin is bonded intimately with the preformed sheet of paper in the gap as the stems are molded, to laminate the resin to the preformed sheet of paper.

26. The method of claim 25 in which loop-engageable heads are molded on the stems while laminating the resin *in situ* to the preformed sheet of paper.

27. The method of claim 25 or 26 in which the preformed sheet of paper has a first stiffness before being introduced to the gap, and a second stiffness after being introduced to the gap, the second stiffness being less than the first stiffness as the result of lamination processing, thereby enabling the fastener laminate material to be fed through a printer.

28. The method of claim 27 in which the stiffness of the resulting fastener laminate material is less than the stiffness of the preformed sheet of paper as introduced to the gap.

29. The method of claim 24 in which the sheet of resin is laminated to the preformed sheet of paper subsequent to molding.

30. The method of claim 24 or 29 in which the preformed sheet of paper is treated subsequent to lamination to render it printable, writeable or photo-developable.

## Patentansprüche

1. Zusammengesetztes Papierhakenprodukt (6), das eine Papierseite (8) und eine Hakenverschlußseite (10) aufweist, wobei die Hakenverschlußseite ein Feld von Befestigungs- bzw. Verschlußhaken (20) aufweist, **dadurch gekennzeichnet, daß** die Papierseite (8) eine Oberfläche aufweist, die ausgebildet ist, um photoentwickelbar oder photoqualitätsbedruckbar zu sein, während die Verschlußhaken auf der entgegengesetzten bzw. abgewandten Seite vorhanden sind.

2. Produkt nach Anspruch 1, wobei die Haken (20) Stiele und Köpfe aufweisen, und wobei wenigstens die Stiele aus einer geformten Form sind oder die Stiele und die Köpfe aus einer geformten Form sind.

3. Produkt nach Anspruch 1 oder 2, wobei das Papier (8) weiß ist und eine Helligkeit von wenigstens 40 Prozent, vorzugsweise wenigstens 60 Prozent, noch bevorzugter wenigstens 80 Prozent aufweist.

4. Produkt nach einem der vorhergehenden Ansprüche, wobei das Papier (8) Charakteristika aufweist, die ausgewählt sind, um Tintenpunktdichten von wenigstens 200 Punkten pro Zoll (dpi) (78,74 Punkte pro cm oder dpc) oder 600 dpi (236,22 dpc) oder 1600 dpi (629,92 dpc) oder 2600 dpi (1023,62 dpc) aufzunehmen und zuverlässig bzw. wahrheitsgetreu wiederzugeben.

5. Produkt nach einem der vorhergehenden Ansprüche, wobei das Papier (8) Eigenschaften aufweist, die gewählt sind, um durch ein Druckverfahren bedruckbar zu sein, das mehr als zwei Farben, vorzugsweise wenigstens vier Farben anwendet.

6. Produkt nach einem der vorhergehenden Ansprüche, wobei das Papier (8) eine glänzende Endbearbeitung bzw. ein Glanzfinish aufweist, vorzugsweise mit nicht mehr als 6 Mikrozoll Oberflächenrauheit (15,24 x 10⁻⁶ cm Oberflächenrauheit) und vorzugsweise wenigstens 60 Prozent Spiegelreflexionsfähigkeit aufweist.

7. Produkt nach einem der vorhergehenden Ansprüche, in welchem die Haken mit einer Unterstützungs- bzw. Rückseitenschicht aus thermoplastischem Harz gebildet sind, das ein Biegemodul zwischen etwa 15.000 und 60.000 Pfund pro Quadratzoll (psi) (1,03421x10⁸ bis 4,13685x10⁸ Pascal), in bestimmten bevorzugten Fällen etwa 30.000 psi (2,06843x10⁸ Pascal) aufweist, wobei vorzugsweise das Harz Polyethylen von Folienqualität und niedriger Dichte ist.

8. Produkt nach einem der vorhergehenden Ansprüche, das eine Gesamtdicke von nicht mehr als 0,035 Zoll (0,89 mm), vorzugsweise nicht mehr als etwa 0,025 Zoll (0,635 mm) aufweist.

9. Produkt nach einem der vorhergehenden Ansprüche, das fähig ist, sich um einen Biegeradius von weniger als etwa 1,5 Zoll (3,81 cm) zu biegen, um durch eine digitale Computerdruckvorrichtung zugeführt zu werden, wie einen Arbeitsplatz- bzw. Desktop-Tintenstrahldrucker, um ein Nichtkontaktdrucken zu ermöglichen, wobei vorzugsweise das Produkt eine Biegecharakteristik aufweist, die ein elastisches Biegen um einen Biegeradius von weniger als etwa 0,8 Zoll (20,32 mm) erlaubt, und wobei vorzugsweise das Produkt die Charakteristik aufweist, daß, wenn es auf einer ebenen Oberfläche mit seiner Papierseite nach oben liegt, jeglicher Abschnitt des Produkts sich nicht auf eine Höhe von mehr als 1,5 Zoll (3,81 cm) von der ebenen Oberfläche kräuselt bzw. krümmt.

10. Produkt nach einem der vorhergehenden Ansprüche, in der Form eines Laminats, wobei das Papier vorgeformt ist und wobei die Papierseite auf die Seite einer Basisschicht abgewandt von der Seite laminiert ist, von welcher sich das Feld von Haken erstreckt, wobei die Laminierung entweder direkt oder über eine oder mehrere zwischenliegende Schicht(en) durchgeführt wird, wobei vorzugsweise das Papier durch ein *in situ* Laminierverfahren laminiert ist bzw. wird, in welchem das Papier direkt oder indirekt an eine harzartige Schicht laminiert wird, während der Stiel geformt wird; oder ein Formen von kompletten Haken, die Stiele und Köpfe aufweisen, an der gegenüberliegenden Seite der Schicht.

11. Produkt nach einem der vorhergehenden Ansprüche, in welchem die abgewandte Seite vollständig mit Haken, vorzugsweise mit Schlaufen ergreifbaren Haken, abgedeckt ist.

12. Produkt nach einem der Ansprüche 1 bis 10, in welchem die Haken als eine Mehrzahl von Bändern von Haken, vorzugsweise durch Schlaufen ergreifbare Haken, präsentiert sind.

13. Produkt nach Anspruch 12, das konfiguriert ist, um durch einen Offset-Drucker mit einer Druckwalze auf einer ersten Seite des Papiers und einer Druckwalze auf der anderen Seite des Papiers bedruckbar zu sein, das zwischen den Bändern, enthaltend Haken, positioniert ist, so daß die Haken nicht durch den Offset-Drucker während eines Druckverfahrens geknickt bzw. zerdrückt werden.

14. Produkt nach einem der vorhergehenden Ansprüche, an welchem Schlaufenmaterial, vorzugsweise ein Papier-Schlaufenlaminat, umfassend genadeltes, gerecktes und stabilisiertes, nicht gewebtes Material auf das Hakenmaterial aufgebracht ist und adaptiert ist, um auf eine Oberfläche transferiert zu werden, auf welcher die Zusammensetzung bzw. der Verbund gesichert sein soll.

15. Produkt nach einem der vorhergehenden Ansprüche, wobei die Haken in Punkten oder Flecken entsprechend einer gewünschten Endverwendung angeordnet sind.

16. Produkt nach einem der vorhergehenden Ansprüche, **dadurch gekennzeichnet, daß**, wenn es vertikal von einer oberen Kante gehalten ist, kein Abschnitt des Produkts sich um mehr als 0,5 Zoll (1,27 cm) seitlich von einer vertikalen Ebene enthaltend die gehaltene Kante aufrollt bzw. kräuselt.

17. Produkt nach einem der vorhergehenden Ansprüche, in welchem die Hakenverschlußseite aus einem Kunststoffharz geformt ist, das eine Charakteristik eines thermischen Schrumpfens von Schmelztemperatur bis zu Raumtemperatur von nicht mehr als 0,005 Zoll/Zoll (0,005 cm/cm) aufweist.

18. Produkt nach einem der vorhergehenden Ansprüche, in welchem das Produkt fähig ist, durch einen Thermodrucker zugeführt zu werden, um einen Strichcode zu drucken.

19. Produkt, umfassend ein Hakenverschlußklebeband, das Seite-an-Seite mit einem druckbaren bzw. bedruckbaren Medium laminiert ist, wobei das Hakenverschlußklebeband ein Feld bzw. Array von Befestigungs- bzw. Verschlußelementen umfaßt, die Stiele aufweisen, die einstückig mit einer Fläche einer Harzbasis ausgebildet sind und sich von dieser erstrecken, wobei sich die Harzbasis in seitlich gestrecktem bzw. gedehntem Zustand befindet, wie bzw. wenn sie auf das bedruckbare Medium laminiert ist bzw. wird.

20. Produkt nach Anspruch 19, in welchem das bedruckbare Medium ein Kunststoffblatt, vorzugsweise Vinyl ist.

21. Produkt nach Anspruch 19, in welchem das bedruckbare Medium ein Papierblatt, wie ein Papierblatt ist, das auf die Größe eines Planzeichenblatts bzw. Architektenplanblatts geschnitten wird.

22. Produkt nach einem der Ansprüche 19 bis 21, in welchem das Hakenverschlußklebeband geformte Stiele umfaßt, die an der Oberseite eben bzw. flach sind, wobei auf die Stiele durch eine Ausbildetätigkeit zum Ausbilden von Verschlußköpfen eingewirkt wurde, entweder bevor oder nachdem die Harzbasis permanent gereckt bzw. gestreckt ist.

23. Produkt nach einem der Ansprüche 19 bis 22 einer Breite und einer Länge, die für ein Anzeigen von Reklame- bzw. Anschlagbrettbildern geeignet sind.

24. Verfahren zum Herstellen eines Verschlußlaminatmaterials, wobei das Verfahren ein Einbringen von geschmolzenem Harz zu einem Spalt, der benachbart einer Oberfläche einer Formwalze definiert ist, die ein Feld bzw. Array von Hohlräumen definiert, so daß ein Druck in dem Spalt das Harz in die Hohlräume beaufschlagt bzw. zwingt, um ein Feld von Stielen zu formen, die sich einstückig bzw. integral von einem Harzblatt erstrecken, und ein permanentes Laminieren des Harzblatts an ein vorgeformtes Papierblatt umfaßt, **dadurch gekennzeichnet, daß**
wie es an das Harz in dem Laminatmaterial gebondet wird, eine breite Seite des vorgeformten Blatts freigelegt wird, und wobei die freigelegte Seite des vorgeformten Blatts eine Oberfläche aufweist, die für ein Drucken oder Schreiben darauf oder für ein Entwickeln von photographischen Bildern darauf geeignet ist, so daß das Verschlußlaminatmaterial eine photoqualitätsbedruckbare oder photoentwickelbare Seite und eine Hakenverschlußseite aufweist.

25. Verfahren nach Anspruch 24, in welchem das vorgeformte Papierblatt zu dem Spalt gemeinsam mit dem geschmolzenen Harz derart eingebracht wird, daß das Harz innig mit dem vorgeformten Papierblatt in dem Spalt verbunden wird, wenn die Stiele geformt werden, um das Harz an das vorgeformte Papierblatt zu laminieren.

26. Verfahren nach Anspruch 25, in welchem durch Schlaufen ergreifbare Köpfe auf den Stielen geformt werden, während das Harz *in situ* an das vorgeformte Papierblatt laminiert wird.

27. Verfahren nach Anspruch 25 oder 26, in welchem das vorgeformte Papierblatt eine erste Steifigkeit, bevor es zu dem Spalt eingebracht wird, und eine zweite Steifigkeit aufweist, nachdem es zu dem Spalt eingebracht wurde, wobei die zweite Steifigkeit kleiner als die erste Steifigkeit als das Ergebnis eines Laminierverarbeitens ist, wodurch es dem Verschlußlaminatmaterial ermöglicht wird, durch einen Drucker zugeführt zu werden.

28. Verfahren nach Anspruch 27, in welchem die Steifigkeit des resultierenden Verschlußlaminatmaterials kleiner als die Steifigkeit des vorgeformten Papierblatts ist, wie es zu dem Spalt eingebracht wird.

29. Verfahren nach Anspruch 24, in welchem das Harzblatt an das vorgeformte Papierblatt nach einem Formen laminiert wird.

30. Verfahren nach Anspruch 24 oder 29, in welchem das vorgeformte Papierblatt nachfolgend auf eine Laminierung behandelt wird, um es druckbar bzw. bedruckbar, beschreibbar oder photoentwickelbar zu machen.

## Revendications

1. Produit composite (6) formé de papier et de crochets ayant un côté papier (8) et un côté de fixation par crochets (10), le côté de fixation par crochets ayant un champ de crochets de fixation (20), **caractérisé en ce que** le côté papier (8) a une surface formée pour être apte au développement de photographies ou imprimable en qualité photo alors que les crochets de fixation sont présents sur le côté faisant face.

2. Produit selon la revendication 1, dans lequel les crochets (20) ont des tiges et des têtes, et dans lequel au moins les tiges sont de forme façonnée, ou les tiges et les têtes sont de forme façonnée.

3. Produit selon l'une ou l'autre des revendications 1 et 2, dans lequel le papier (8) est blanc et a une brillance d'au moins 40 pour cent, de préférence d'au moins 60 pour cent, et de manière plus préférentielle d'au moins 80 pour cent.

4. Produit selon l'une quelconque des revendications précédentes, dans lequel le papier (8) a des caractéristiques choisies pour recevoir et présenter exactement une densité ponctuelle optique de noir d'au moins 200 points par pouce (ppp) (78,74 points par centimètre ou ppc) ou 600 ppp (236,22 ppc) ou 1600 ppp (629,92 ppc) ou 2600 ppp (1023,62 ppc).

5. Produit selon l'une quelconque des revendications précédentes, dans lequel le papier (8) a des propriétés choisies pour être imprimable par un processus d'impression qui emploie plus de deux couleurs, de préférence au moins quatre couleurs.

6. Produit selon l'une quelconque des revendications précédentes, dans lequel le papier (8) a une finition brillante, de préférence avec une rugosité surfacique ne dépassant pas 6 micro-pouces (15,24 x 10⁻⁶ cm de rugosité surfacique) et ayant de préférence un facteur de réflexion spéculaire d'au moins 60 pour cent.

7. Produit selon l'une quelconque des revendications précédentes, dans lequel les crochets sont formés avec une couche de renforcement de résine thermoplastique ayant un module en flexion entre environ 15,000 et 60,000 livres par pouce carré (lpc) (1,03421x10⁸ à 4,13685x10⁸ pascal), dans certains cas préférés d'environ 30,000 lpc (2,06843x10⁸ pascal), la résine étant de préférence du polyéthylène en qualité de film et à basse densité.

8. Produit selon l'une quelconque des revendications précédentes, ayant une épaisseur totale ne dépassant pas 0,035 pouce (0,89 mm), de préférence en dépassant pas 0,025 pouce (0,635 mm).

9. Produit selon l'une quelconque des revendications précédentes, capable de fléchir sur un rayon de fléchissement inférieur à 1,5 pouce (3,81 cm) pour passer à travers un appareil d'impression numérique informatique, comme une imprimante au jet d'encre d'un ordinateur de bureau, afin de permettre une impression sans contact, le produit ayant de préférence une caractéristique de fléchissement permettant la flexion élastique sur un rayon de flexion inférieur à environ 0,8 pouce (20,32 mm), et le produit ayant de préférence la caractéristique que, lorsqu'il est posé sur une surface plate avec son côté papier montrant vers le haut, une quelconque partie du produit ne se recroqueville pas à une hauteur dépassant 1,5 pouce (3,81 cm) depuis la surface plate.

10. Produit selon l'une quelconque des revendications précédentes, sous la forme d'un laminé, dans lequel le papier est pré-formé et dans lequel le côté papier est laminé vers le côté d'un recto de couche de base vers le côté depuis lequel s'étend le champ de crochets, le laminage étant soit direct, soit au moyen d'une ou de plusieurs couches intermédiaires, le papier étant de préférence est laminé par un processus de laminage sur site pendant lequel le papier laminé directement ou indirectement en une couche résineuse pendant le façonnage de la tige, ou le façonnage des crochets complets ayant des tiges et des têtes sur le côté opposé de la couche.

11. Produit selon l'une quelconque des revendications précédentes, dans lequel le côté faisant face est entièrement recouvert de crochets, de préférence de crochets pouvant s'engager à la manière de boucles.

12. Produit selon l'une quelconque des revendications 1 à 10, dans lequel les crochets sont présentés comme une pluralité de bandes de crochets, de préférence des crochets pouvant s'engager à la manière de boucles.

13. Produit selon la revendication 12, configuré de manière à être imprimable par une imprimante offset avec un rouleau d'impression sur un premier côté du papier et un rouleau presseur sur l'autre côté du papier, positionné entre les bandes contenant des crochets de telle sorte que les crochets ne sont pas écrasés par l'imprimante offset pendant un processus d'impression.

14. Produit selon l'une quelconque des revendications précédentes, dans lequel du matériau en boucle, de préférence un laminé à boucles en papier comprenant un matériau non tissé aiguilleté, étiré et stabilisé, est appliqué sur le matériau à crochets et est adapté pour être transféré vers une surface sur laquelle il est souhaité pour assurer le composite.

15. Produit selon l'une quelconque des revendications précédentes, dans lequel les crochets sont placés dans des points ou dans des pièces rapportées, correspondant à une utilisation finale désirée.

16. Produit selon l'une quelconque des revendications précédentes, **caractérisé en ce que**, lorsqu'il est maintenu à la verticale depuis un bord supérieur, aucune partie du produit ne se recroqueville latéralement à plus de 0,5 pouce (1,27 cm) depuis un plan vertical contenant le bord maintenu.

17. Produit selon l'une quelconque des revendications précédentes, dans lequel le côté de fixation par crochets est façonné à partir d'une résine plastique ayant une caractéristique de rétrécissement thermique depuis une température de fusion à une température ambiante, ne dépassant pas 0,005 pouce/pouce (0,005 centimètre/centimètre).

18. Produit selon l'une quelconque des revendications précédentes, dans lequel le produit est capable d'être alimenté à travers une imprimante thermique pour imprimer un code à barres.

19. Produit comprenant une bande de fixation par crochets, laminée et face à face avec un support imprimable, dans lequel la bande de fixation par crochets comprend un tableau d'éléments de fixation ayant des tiges formées en un seul tenant avec et s'étendant depuis un côté d'une base de résine, la base de résine étant dans un état étiré latéralement de manière à être laminée sur le support imprimable.

20. Produit selon la revendication 19, dans lequel le support imprimable est une feuille de matière plastique, de préférence du vinyle.

21. Produit selon la revendication 19, dans lequel le support imprimable est une feuille de papier, telle qu'une feuille de papier coupée à la dimension d'une feuille de dessin d'architecte.

22. Produit selon l'une des revendications 19 à 21, dans lequel la bande de fixation par crochets comprend des tiges façonnées qui sont à tête plate, les tiges ayant été exécutées au moyen d'une action de formage pour former des têtes de fixation, soit avant, soit après que la base de résine ait été étirée de manière permanente.

23. Produit selon l'une des revendications 19 à 22, d'une longueur et d'une largeur appropriées pour l'affichage d'images pour affiches.

24. Méthode de production d'un matériau laminé de fixation, la méthode comprenant l'introduction d'une résine fondue vers une fente définie et adjacente à une surface d'un rouleau de façonnage définissant un tableau de cavités, de sorte qu'une pression dans la fente force la résine jusque dans les cavités pour façonner un ensemble de tiges s'étendant en un seul tenant depuis une feuille de résine et laminant en permanence la feuille de résine en une feuille de papier pré-formée, **caractérisée en ce que**, pendant la fixation à la résine dans le matériau laminé, un côté large de la feuille pré-formée est dégagé et dans lequel le côté dégagé de la feuille pré-formée a une surface appropriée à l'impression ou à l'écriture sur celle-ci ou au développement d'images photographiques sur celle-ci, de telle sorte que le matériau laminé de fixation a une qualité photographique imprimable ou un côté apte au développement de photographies et un côté de fixation par crochets.

25. Méthode selon la revendication 24, dans laquelle la feuille de papier pré-formée est introduite vers la fente le long de la résine fondue de sorte que la résine est fixée intimement à la feuille de papier pré-formée dans la fente tandis que les tiges sont façonnées, afin de laminer la résine sur la feuille de papier pré-formée.

26. Méthode selon la revendication 25, dans laquelle des têtes pouvant être engagées à la manière de boucles sont façonnées sur les tiges pendant le laminage de la résine sur site sur la feuille de papier pré-formée.

27. Méthode selon l'une ou l'autre des revendications 25 ou 26, dans laquelle la feuille de papier pré-formée a une première rigidité avant d'être introduite vers la fente et une seconde rigidité après avoir été introduite vers la fente, la seconde rigidité étant inférieure à la première rigidité comme étant le résultat du processus de laminage, cela permettant au matériau laminé de fixation d'être alimenté vers une imprimante.

28. Méthode selon la revendication 27, dans laquelle la rigidité du matériau laminé de fixation résultant est inférieure à la rigidité de la feuille de papier pré-formée lorsqu'elle est introduite vers la fente.

29. Méthode selon la revendication 24, dans laquelle la feuille de résine est laminée sur la feuille de papier pré-formée à la suite du façonnage.

30. Méthode selon l'une ou l'autre des revendications 24 ou 29, dans laquelle la feuille de papier pré-formée est traitée à la suite du laminage pour la rendre apte à l'impression, à l'écriture ou au développement de photographies.
